# EUROPEAN PATENT SPECIFICATION

(11) **EP 1 310 541 B1**
(45) Date of publication and mention of the grant of the patent: **14.05.2008**
(21) Application number: 03003075.3
(22) Date of filing: 12.11.1999
(51) Int. Cl.: C09K 19/02, C09K 19/46, C09K 19/42, C09K 19/44

(54) **Supertwisted nematic liquid crystal displays**
Supertwist-nematische Flüssigkristallanzeigen
Affichages à cristaux liquides nématiques supertwist

(30) Priority: 19.11.1998 EP 98121578
(43) Date of publication of application: 14.05.2003
(62) Divisional of application: 99122029.4
(73) Proprietor: Merck Patent GmbH, 64293 Darmstadt (DE)
(72) Inventor: Shimano, Fumio, Miura shi, Kanagawa Pref. 238-0111 (JP); Kojima, Akihiro, Atsugi-shi, Kanagawa Pref. 243-0813 (JP); Fujii, Yukiko, Sagarnihara-shi, Kanagawa Pref. 228-0826 (JP); Saito, Izumi, 64285 Darmstadt (DE); Totani, Kazuo, Naka-gun, Kanagawa Pref. 255-0003 (JP)

(56) References cited:
- EP-A- 0 808 886
- DE-A1- 19 720 296
- DE-A1- 19 746 793
- DE-A1- 19 750 957
- GB-A- 2 322 631
- US-A- 5 714 087

## Description

The invention relates to supertwist nematic liquid-crystal displays (STN-LCDs) having short switching times and good steepnesses and angle dependencies, and to the novel nematic liquid-crystal mixtures used therein.

STN-LCDs as in the heading are known, for example from EP 0,131,216 B1; DE 3,423,993 A1; EP 0,098,070 A2; M. Schadt and F. Leenhouts, 17th Freiburg conference on liquid crystals (8-10.04.87); K. Kawasaki et al., SID 87 Digest 391 (20.6); M. Schadt and F. Leenhouts, SID 87 Digest 372 (20.1); K. Katoh et al., Japanese Journal of Applied Physics, Vol. 26, No. 11, L 1784-L1786 (1987); F. Leenhouts et al., Appl. Phys. Lett. 50 (21), 1468 (1987); H.A. van Sprang and H.G. Koopman, J. Appl. Phys. 62 (5), 1734 (1987); T.J. Scheffer and J. Nehring, Appl. Phys. Lett. 45 (10), 1021 (1984), M. Schadt and F. Leenhouts, Appl. Phys. Lett. 50 (5), 236 (1987) and E.P. Raynes, Mol. Cryst. Liq. Cryst. Letters, Vol. 4 (1), pp. 1-8 (1986). The term STN-LCD here includes any relatively highly twisted display element having a twist angle with a value between 160 ° and 720 °, such as, for example, the display elements of Waters et al. (C.M. Waters et al., Proc. Soc. Inf. Disp. (New York) (1985) (3rd Intern. Display Conference, Kobe, Japan), the STN-LCDs (DE OS 3,503,259), SBE-LCDs (T.J. Scheffer and J. Nehring, Appl. Phys. Lett. 45 (1984) 1021), OMI-LCDs (M. Schadt andF. Leenhouts, Appl. Phys. Lett. 50 (1987), 236, DST-LCDs (EP OS 0,246,842) or BW-STN-LCDs (K. Kawasaki et al., SID 87 Digest 391 (20.6)).

Compared with standard TN displays, STN-LCDs of this type are distinguished by significantly better steepnesses of the electrooptical characteristic curve (in the following simply called 'steepness') and, associated therewith, better contrast values, and by a significantly lower angle dependence of the contrast. Of particular interest are STN-LCDs with extremely short switching times, in particular also at relatively low temperatures. In order to achieve short switching times, the rotational viscosities, in particular of the liquid crystal mixtures have hitherto been optimized using usually optimized combinations of liquid crystal components and optionally also monotropic additives of relatively high vapour pressure.

The documents GB 2322631 A, DE 19750957 A1, DE 19720296 A1 and DE 19746793 A1 propose liquid-crystal mixtures comprising compounds of the formula 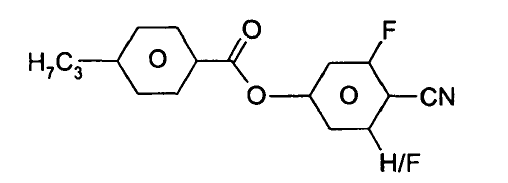 and at least one further defined compound like 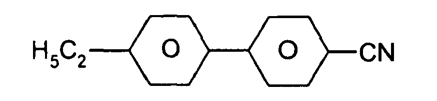 or 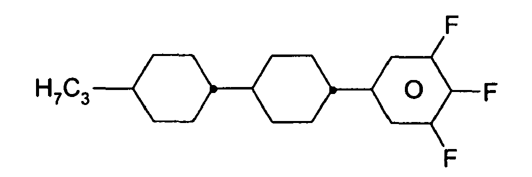 or

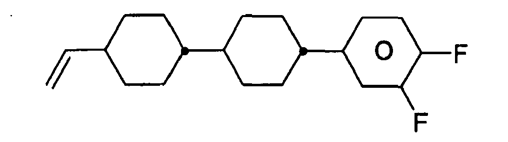

However, the switching times achieved were not adequate for all applications.

Shorter switching times can also be achieved by reducing the thickness of LC layer of the STN-LCD and using liquid-crystal mixtures with a higher birefringence Δn.

All these approaches to shorter switching times, however, still end up with mixtures which were not adequate for every use.

Further demands for STN-LCD are a higher multiplexability (resulting in a smaller number of driving IC's), lower threshold voltages and a high steepness.

To achieve a high steepness in STN-LCDs, the liquid crystal mixtures should exhibit comparatively high values of the ratio of the elastic constants K₃₃/K₁₁ and comparatively low values of Δε/ε_{┴}, wherein Δε is the dielectric anisotropy and ε_{┴} is the dielectric constant in vertical direction to the long molecular axis.

Apart of the optimization of the contrast and the switching times such liquid crystal mixtures should fulfill further important requirements such as:
1. A broad d/p window of cell gap d and pitch p, which is defined as the range between the lower and upper limit of the d/p values.
2. A high chemical stability.
3. A high electrical resistance.
4. A low dependence of the threshold voltage on temperature and frequency.

Optimal parameters, however, cannot be achieved simultaneously for all the properties mentioned above because of opposite influence of different material parameters such as dielectric and elastic properties. Thus, the parameter combinations achieved so far are still not sufficient, especially for high multiplex STN-LCDs (with a multiplex rate in the range of 1/400), but also for middle and low multiplex STN-LCD (multiplex rate in the range of 1/64 and 1/16, respectively).

Therefore, there continues to be a great demand for improved STN-LCDs having short switching times and, at the same time, a broad service-temperature range, a high steepness (i.e. low steepness values), good angle dependency of the contrast and low threshold voltage, which meet the abovementioned requirements.

The invention has the object of providing STN-LCDs which only have the above mentioned disadvantages to a small extent, or not at all, and at the same time have very useful overall properties, especially short switching times at low temperatures and a high steepness.

It has now been found that this object can be achieved if nematic liquid-crystal mixtures are used which comprise compounds having a 3,4,5-trifluorophenyl group together with one or more compounds of formula IIIb2 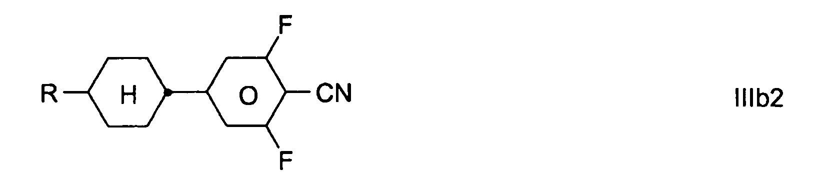 wherein
- R: is an optionally fluorinated alkyl, alkoxy, alkenyl or alkenyloxy group with 1 to 12 C atoms, wherein one or two non-adjacent CH₂ groups can be replaced by -O-, -CH=CH-, -CO-, -OCO- or -COO- in such a manner that O atoms are not directly adjacent to one another,
at least one compound of formula I 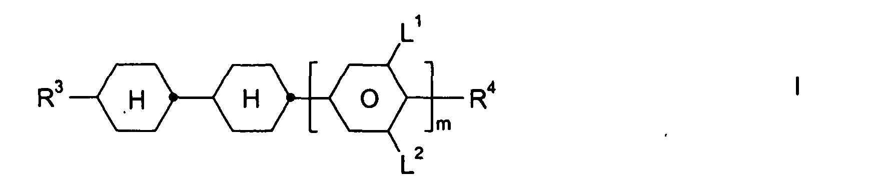 wherein
- R³: is an alkenyl group with 2 to 7 C atoms,
- R⁴: is an optionally fluorinated alkyl, alkoxy, alkenyl or alkenyloxy group with 1 to 12 C atoms, wherein one or two non-adjacent CH₂ groups can be replaced by -O-, -CH=CH-, -CO-, -OCO- or -COO- in such a manner that O atoms are not directly adjacent to one another, or, in case m = 1, R⁴ can also be Q-Y,
- Q: is CF₂, OCF₂, CFH, OCFH or a single bond,
- Y: is F or Cl,
- L¹ and L²: are each independently H or F,
- m: is 0 or 1
and at least one compound of formula IIb 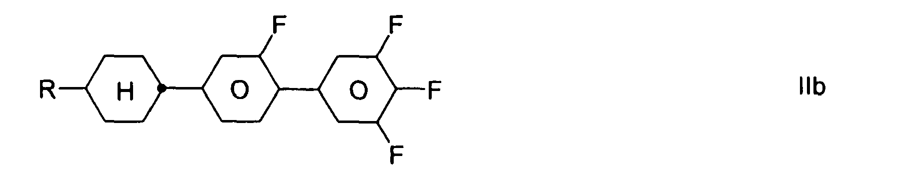 wherein R has the meaning given above.

The use of compounds of having a 3,4,5-trifluorophenyl group together with compounds of formula I in the liquid crystal mixtures for STN-LCDs according to the invention especially leads to
- a high steepness
- a low threshold voltage with a low temperature dependence, and
- short switching times especially at low temperatures.

Furthermore, the liquid crystal mixtures according to the present invention show the following advantageous properties
- a low viscosity,
- a low temperature dependence of the threshold voltage and the operating voltage,
- improved stability of the mixture in the display at low temperatures.

The invention thus relates to an STN-LCD having
- two plane-parallel outer plates which, together with a frame, form a cell,
- a nematic liquid-crystal mixture of positive dielectric anisotropy which is present in the cell,
- electrode layers with superposed alignment layers on the insides of the outer plates which address each pixel by orthogonal row wave forms,
- pre-tilt angle between the longitudinal axis of the molecules at the surface of the outer plates and the outer plates of from about 1 degree to 30 degrees, and
- a twist angle of the liquid-crystal mixture in the cell from alignment layer to alignment layer with a value of between 22.5 and 600°, wherein the nematic liquid-crystal mixture essentially consists of
   a) 30-90 % by weight of a liquid-crystalline component A, comprising one or more compounds having a dielectric anisotropy of more than +1.5;
   b) 10- 45 % by weight of a liquid-crystalline component B, comprising one or more compounds having a dielectric anisotropy from -1.5 to +1.5;
   c) 0-10 % by weight of a liquid-crystalline component D, comprising one or more compounds having a dielectric anisotropy of less than -1.5, and
   d) an optically active component C in such an amount that the ratio between the layer thickness (separation of the plane-parallel outer plates) and the natural pitch of the chiral nematic liquid-crystal mixture is from about 0.2 to 1.3,
characterized in that the liquid crystal mixture comprises at least one compound of component A having a 3,4,5-trifluorophenyl group
and component A further comprises one or more compounds of formula IIIb2 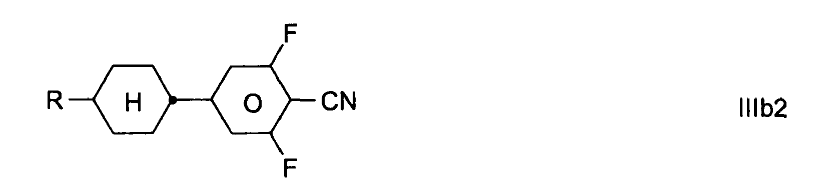 wherein
- R: is an optionally fluorinated alkyl, alkoxy, alkenyl or alkenyloxy group with 1 to 12 C atoms, wherein one or two non-adjacent CH₂ groups can be replaced by -O-, -CH=CH-, -CO-, -OCO- or -COO- in such a manner that O atoms are not directly adjacent to one another,
at least one compound of formula I 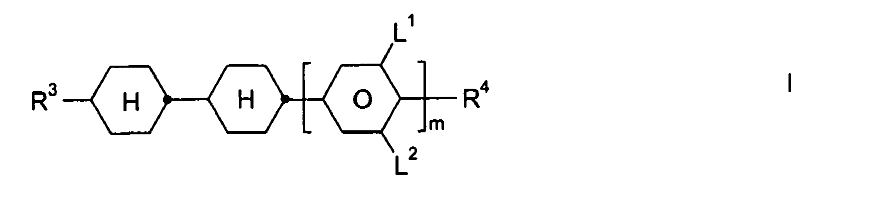 wherein
- R³: is an alkenyl group with 2 to 7 C atoms,
- R⁴: is an optionally fluorinated alkyl, alkoxy, alkenyl or alkenyloxy group with 1 to 12 C atoms, wherein one or two non-adjacent CH₂ groups can be replaced by -O-, -CH=CH-, -CO-, -OCO- or -COO- in such a manner that O atoms are not directly adjacent to one another, or, in case m = 1, R⁴ can also be Q-Y,
- Q: is CF₂, OCF₂, CFH, OCFH or a single bond,
- Y: is F or Cl,
- L¹ and L²: are each independently H or F,
- m: is 0 or 1
and at least one compound of formula IIb 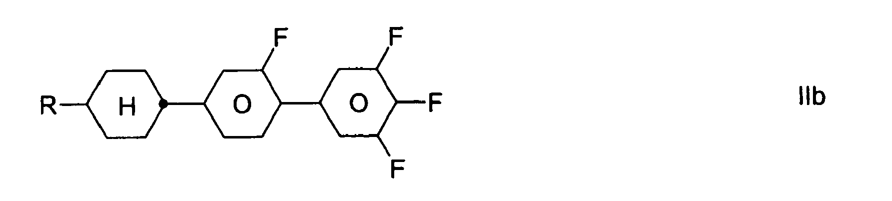 wherein R has the meaning given above.

Another object of the invention are inventive liquid crystal mixtures as described above and below for use in STN-LCDs.

The formula I comprises the following subformulae 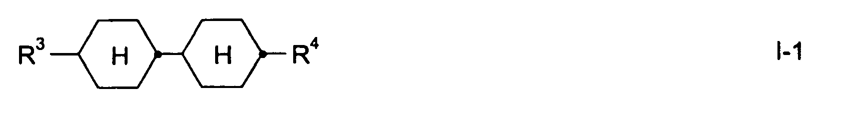 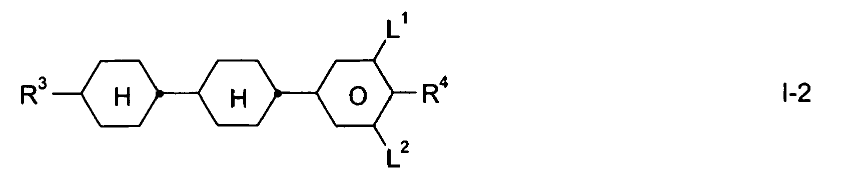 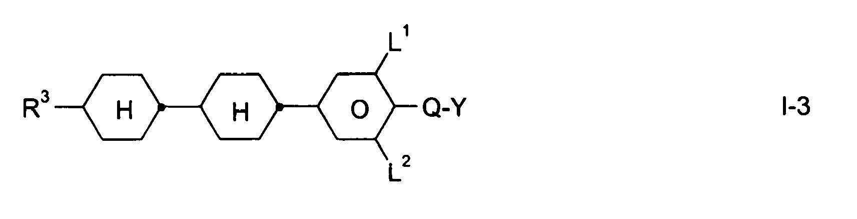 wherein R³, L¹, L², Q and Y have the meanings of formula I and
- R⁴: is an optionally fluorinated alkyl, alkoxy, alkenyl or alkenyloxy group with 1 to 12 C atoms, wherein one or two non-adjacent CH₂ groups can be replaced by -O-, -CH=CH-, -CO-, -OCO- or -COO- in such a manner that O atoms are not directly adjacent to one another.

In the formulae I-1, I-2 and 1-3, R³ is especially preferably 1 E-alkenyl oder 3 E-alkenyl with 2 to 7 C-atoms.

Especially preferred compounds of formula I-1 are those wherein R⁴ is alkenyl with 2 to 7 C atoms, in particular those of the following formulae 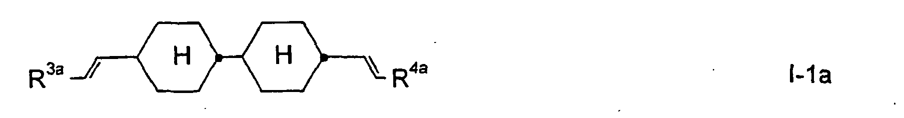 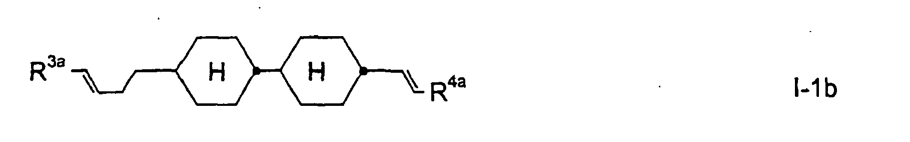 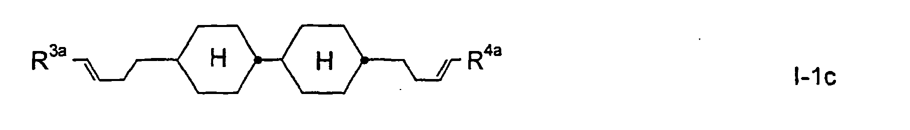 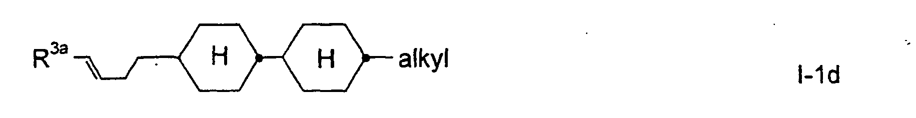 wherein R^{3a} and R^{4a} are each independently H, CH₃, C₂H₅ or n-C₃H₇ and alkyl is an alkyl group with 1 to 7 C atoms.

Particularly preferred are STN-LCDs according to the present invention, wherein the liquid crystal mixture comprises at least one compound selected of formulae I-1a and I-1c, wherein R^{3a} and R^{4a} respectively have the same meaning.

Of the compounds of formula 1-2 especially preferred are those wherein L¹ and L² are denoting H.

Further preferred compounds of formula 1-2 are those wherein R⁴ is alkyl with 1 to 8, in particular 1, 2 or 3 C-atoms, and R³ is 1 E-alkenyl or 3E-alkenyl with 2 to 7, in particular 2, 3 or 4 C-atoms.

Of the compounds of formula 1-3 especially preferred are those wherein one or both of L¹ and L² are denoting F and Q-Y is F or OCF₃.

Further preferred compounds of formula 1-3 are those wherein R³ is 1 E-alkenyl or 3E-alkenyl with 2 to 7, in particular 2, 3 or 4 C-atoms.

The compounds of formulae I-1 and I-2 having a dielectric anisotropy from - 1.5 to + 1.5 belong to component B as defined above, whereas polar compounds of formula 1-2 and in particular of formula 1-3 having a dielectric anisotropy of more than + 1.5 belong to component A as defined above.

The use of compounds of formula I leads to inventive mixtures with particularly low values of the rotational viscosity and to STN-LCD's with a high steepness of the electrooptical curve and fast switching times especially at low temperatures.

The compounds of component A having a 3,4,5-trifluorophenyl group are preferably selected of formula II 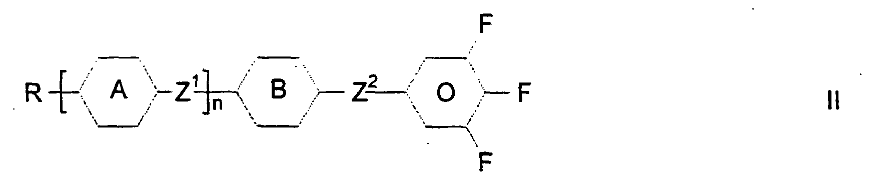 wherein
- R: is an optionally fluorinated alkyl, alkoxy, alkenyl or alkenyloxy group with 1 to 12 C atoms, wherein one or two non-adjacent CH₂ groups can be replaced by -O-, -CH=CH-, -CO-, -OCO- or -COO- in such a manner that O atoms are not directly adjacent to one another, 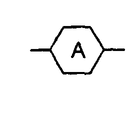 and 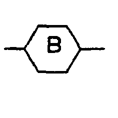 are each independently 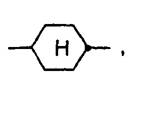 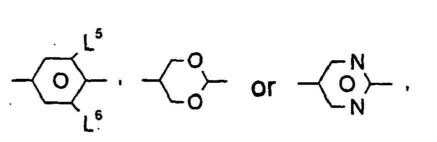
- L⁵ and L⁶: are each independently H or F,
- Z¹ and Z²: are independently of each other -COO-, -CH₂CH₂-, -CH=CH-, -C≡C- or a single bond, and
- n: is 0, 1 or 2.

Especially preferred compounds of formula II are those of the following formulae 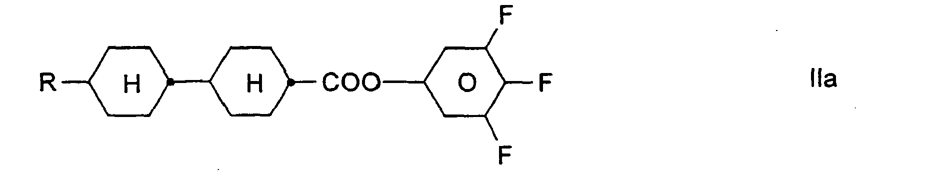 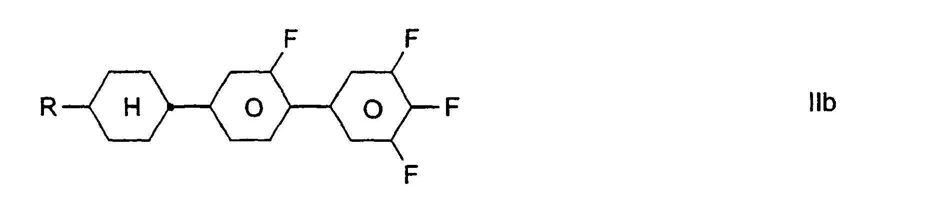 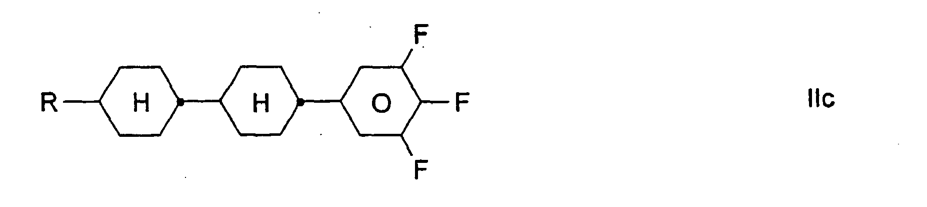 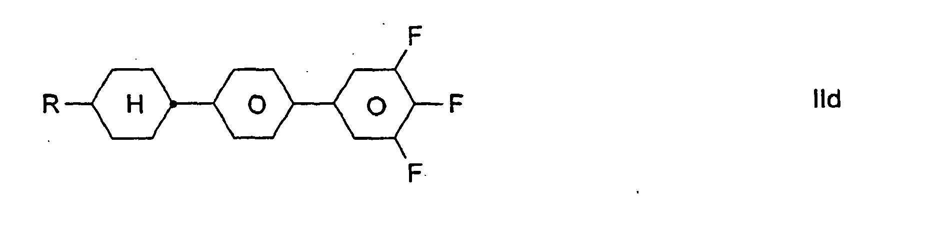 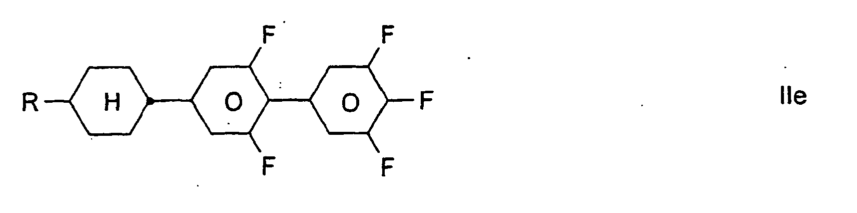 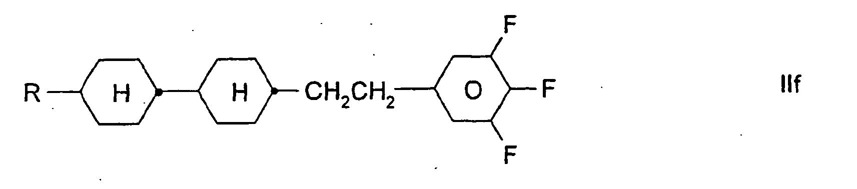 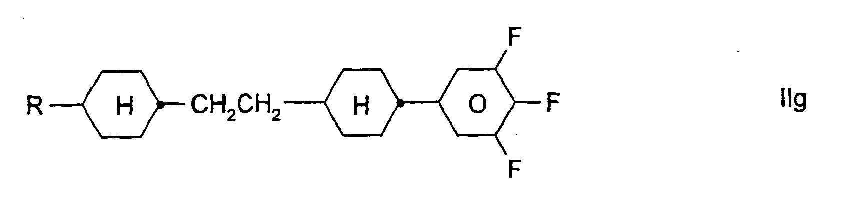 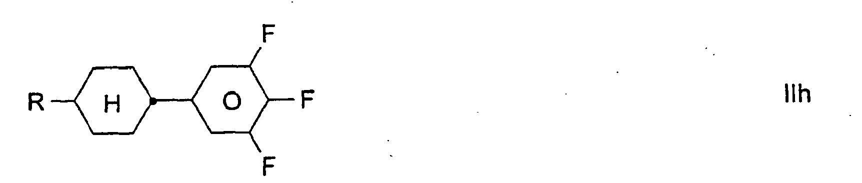 wherein R is as defined in formula II. R in these formulae is particularly preferably alkyl or alkoxy with 1 to 8 C atoms.

Especially preferred are compounds of formula IIa, IIb, IIc, IId and IIe, in particular compounds of formula IIa and IIb.

Preferably component A further comprises one or more compounds of formula III 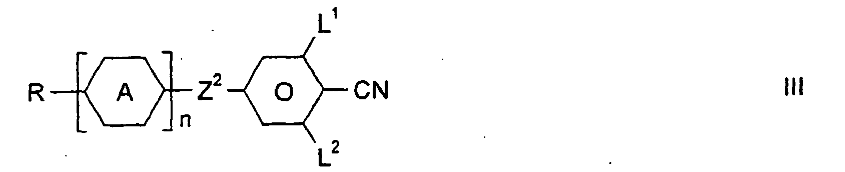 wherein R, A, Z² and n have each independently one of the meanings of formula II and L¹ and L² are each independently H or F.

The compounds of formula III are preferably selected from the following formulae 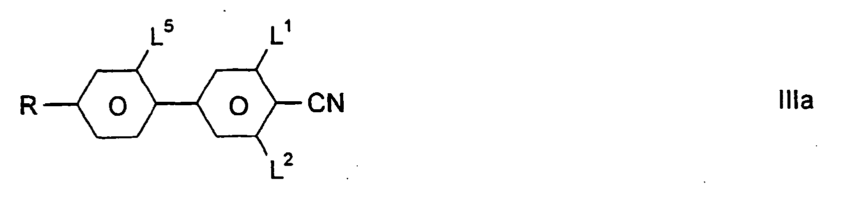 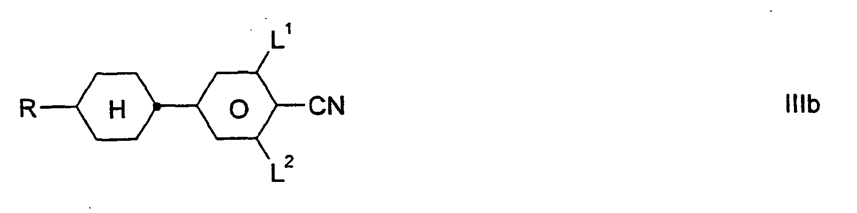 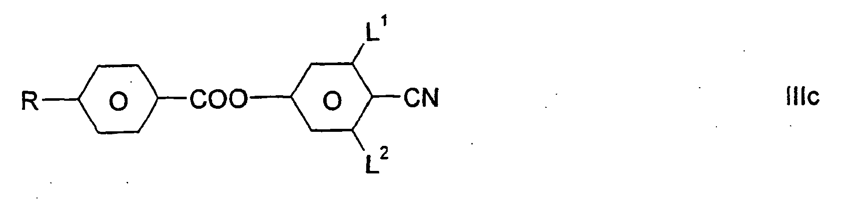 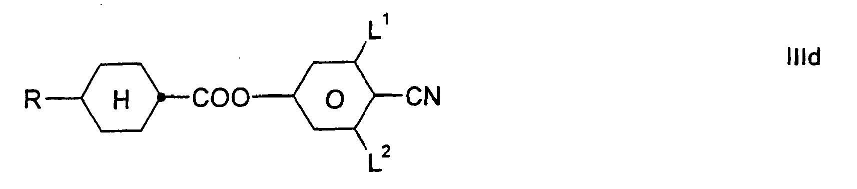 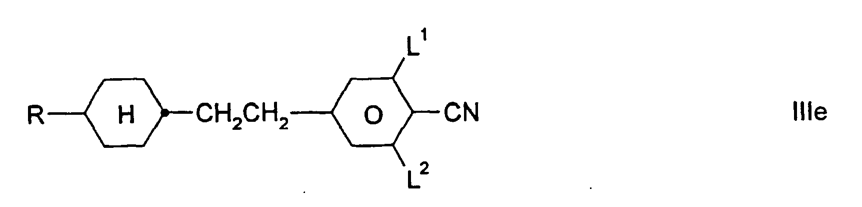 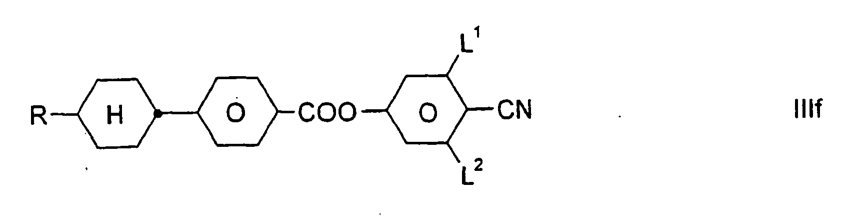 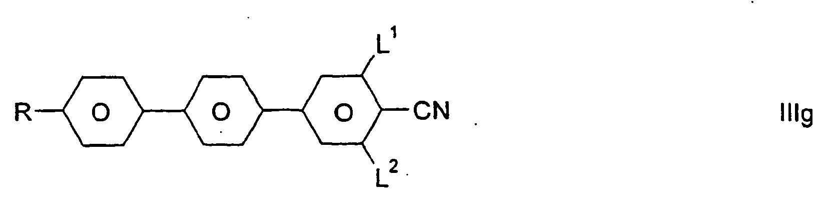 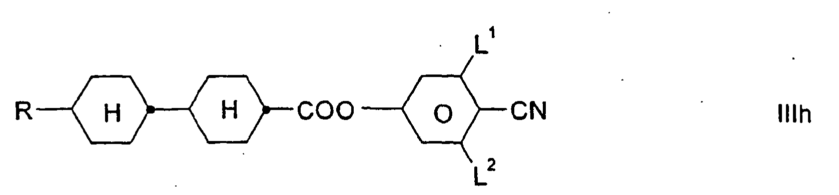 wherein R, L¹ and L² have each independently one of the meanings of formula III.

Especially preferred are compounds of formula IIIb, IIIc and IIIf, in particular compounds of the following subformulae 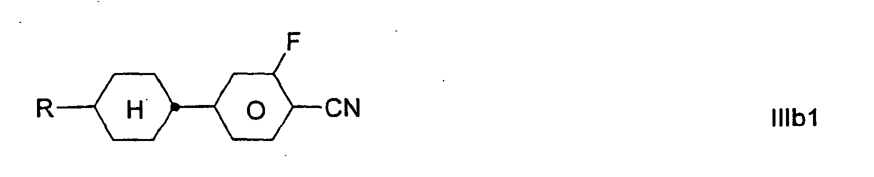 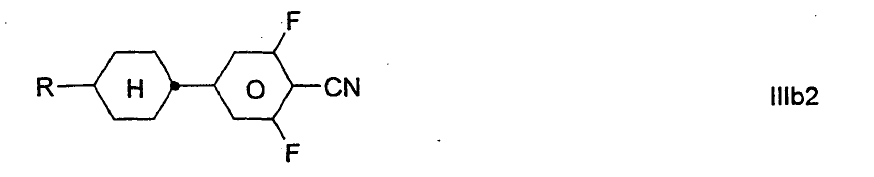 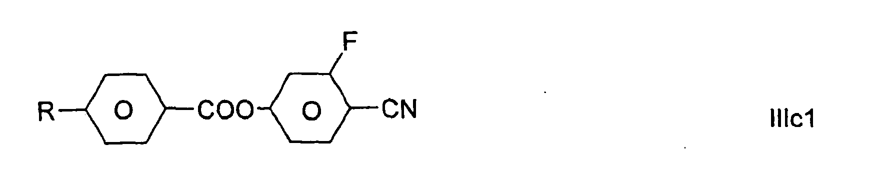 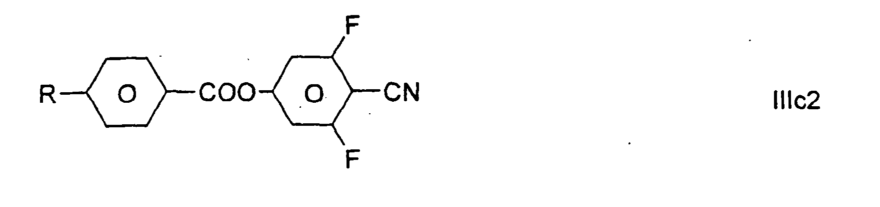 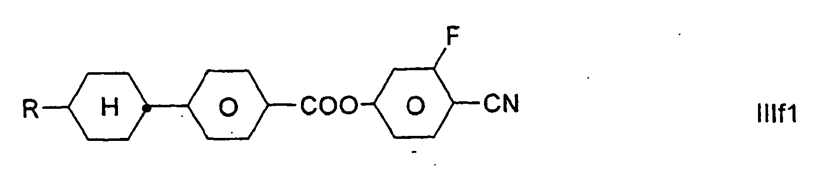 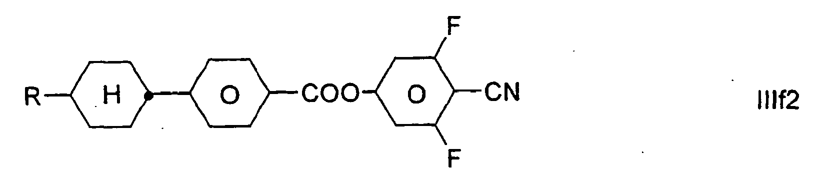 wherein R is as defined in formula III.

Further preferred are compounds of formula IIIh, wherein L² is H and L¹ is H or F, in particular F.

Preferably the liquid crystal mixtures according to the present invention comprise one or more compounds of formula V 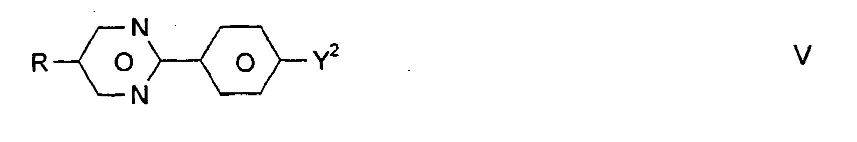 wherein R has one of the meanings of formula II and Y²is F or Cl, in particular wherein R is alkyl or alkoxy with 1 to 8 C-atoms and/or Y² is F.

In addition to compounds of formula II, the component A can also comprise one or more compounds with terminal fluoro or fluorinated groups selected of formula II 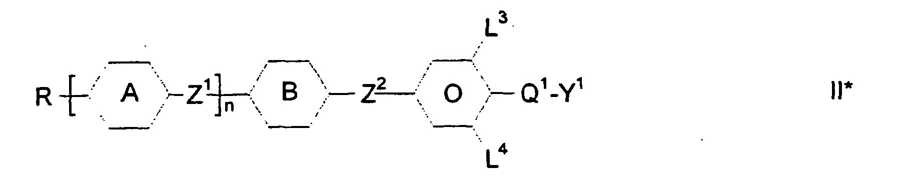 wherein R, A, B, Z¹, Z² and n have each independently one of the meanings of formula II,
- L³ and L⁴: are each independently H or F,
- Y¹: is F or Cl, and
- Q¹: is CF₂, OCF₂, CFH, OCFH or a single bond,
with the provisos that L³, L⁴ and Q¹-Y¹ are not at the same time F, and that in case n is 1, A and B are both 1,4-cyclohexylene and Z¹ and Z² are single bonds, then R is not an alkenyl group with 2 to 7 C atoms.

Especially preferred compounds of formula II* are those of the following formulae 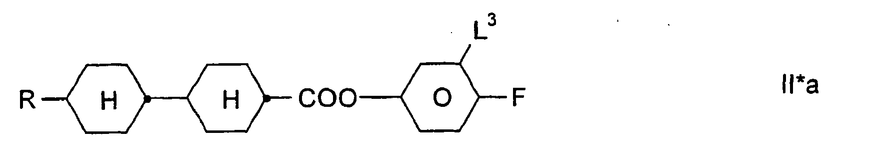 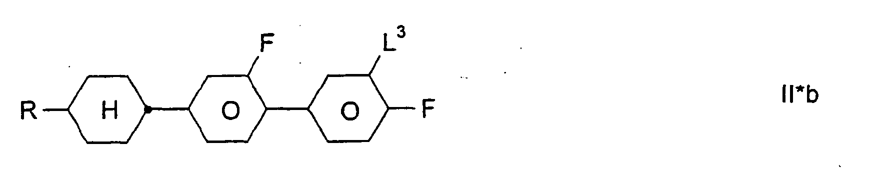 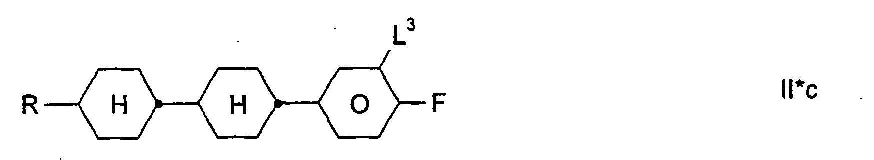 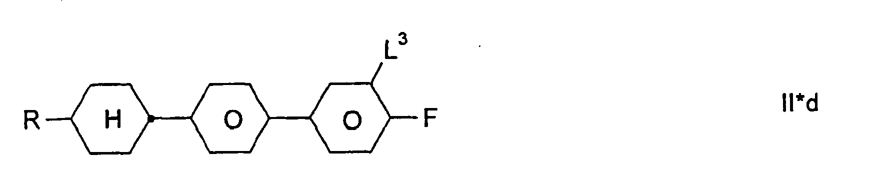 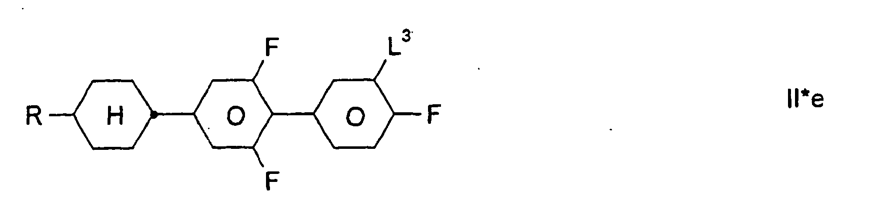 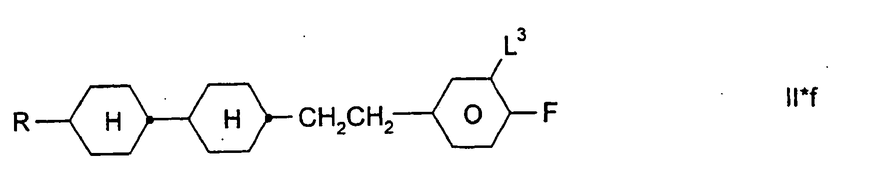 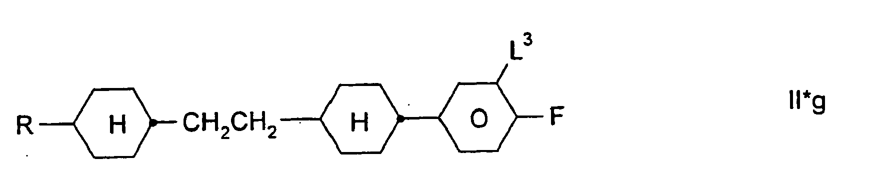 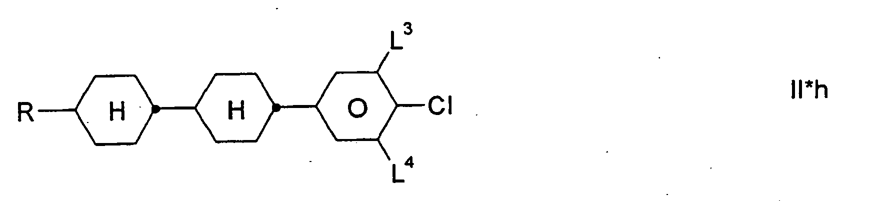 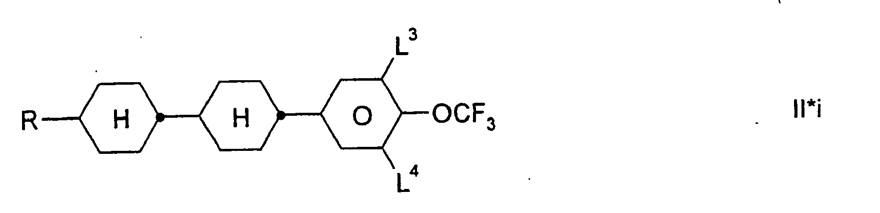 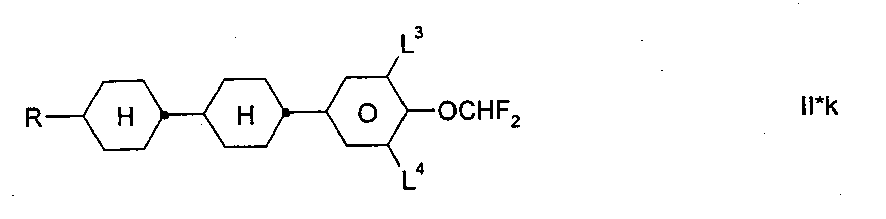 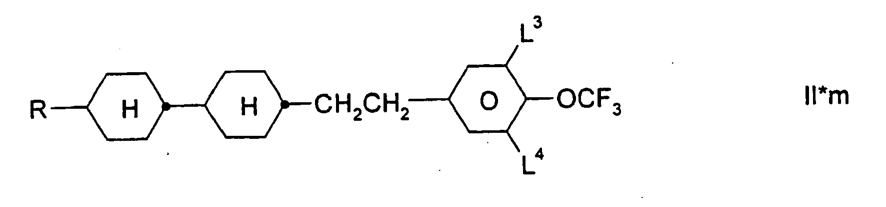 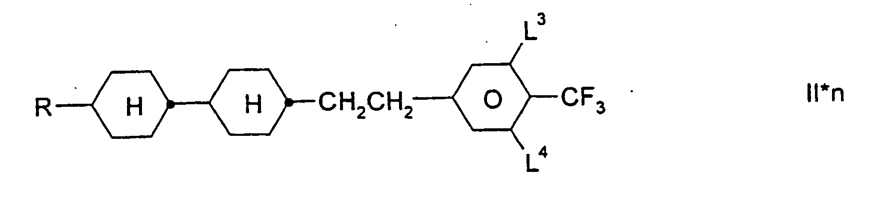 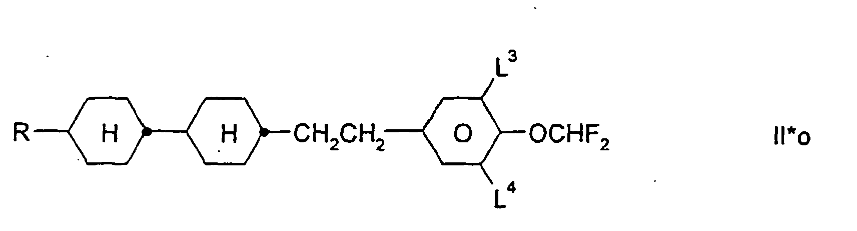 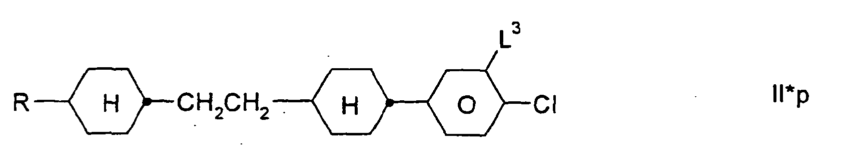 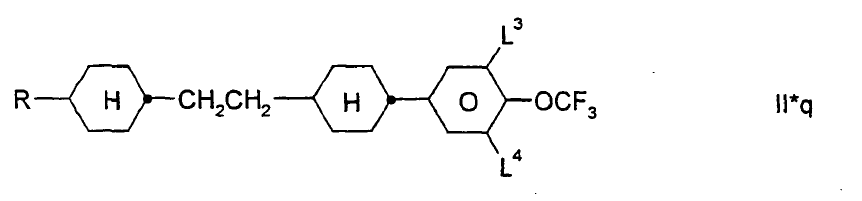 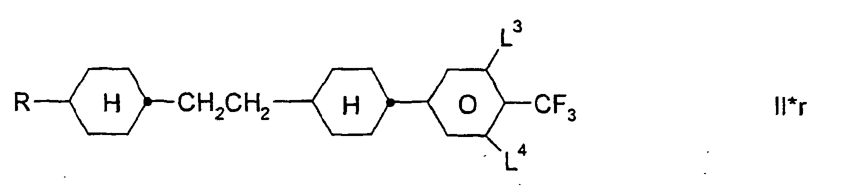 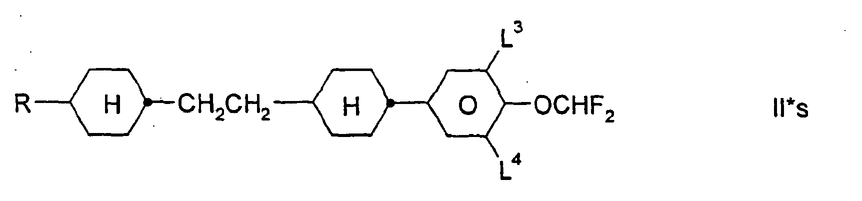 wherein R is as defined in formula II, and L³ and L⁴ are each independently H or F. R in these formulae is particularly preferably alkyl or alkoxy with 1 to 8 C atoms.

The individual compounds of the formulae I, II, II*, III, V and also other compounds which can be used in the STN-LCDs according to the invention, are either known or can be prepared analogously to the known compounds.

In particular the compounds of the formulae I have low viscosities, in particular low rotational viscosities, low values of the ratio of the elastic constants (K₃/K₁) and lead therefore to short switching times, whereas the compounds of formula II with a high dielectric anisotropy, especially when being present in high amounts like in the inventive displays, lead to a reduced threshold voltage.

Preferred liquid-crystal mixtures which can be used according to the invention contain one or more compounds from component A preferably in a proportion of 30 % to 90 %, preferably 45 % to 75 %. These compounds or this compound have a dielectric anisotropy of more than +3 (preferably of more than +8, in particular more than +12).

Further preferred mixtures comprise
- one or more, in particular two to five compounds of formula I,
- one or more, in particular two to six compounds of formula II,
- one or more, in particular two to six compounds of formula III, and
- one or more, in particular one, two or three compounds of formula V.

Preferred liquid-crystal mixtures contain one or more compounds from group B, preferably in a proportion of 10 to 45 %. These compounds or this compound from group B have in particular low values of the rotational viscosity γ₁.

Preferably component B comprises one or more compounds selected from the group comprising IV1 to IV9 with two rings 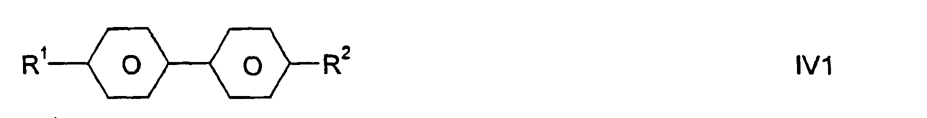 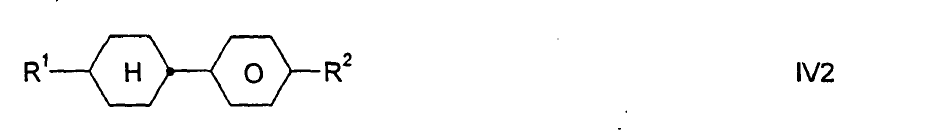 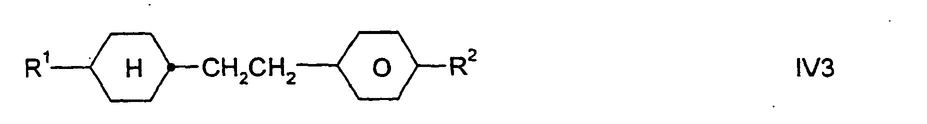 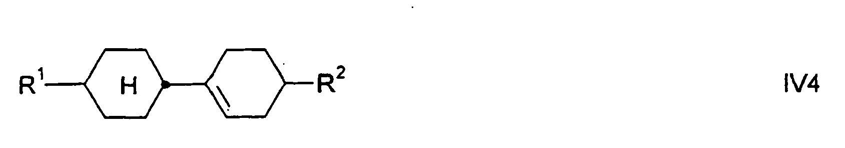 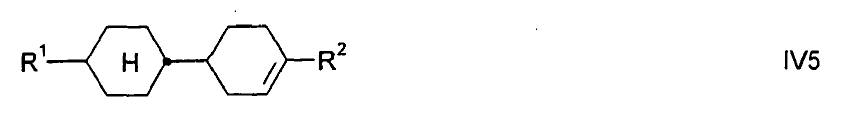 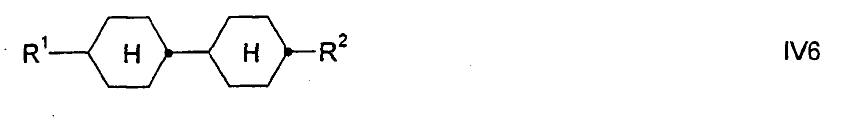 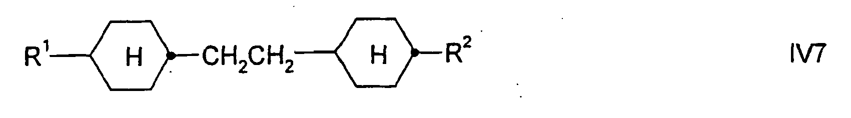 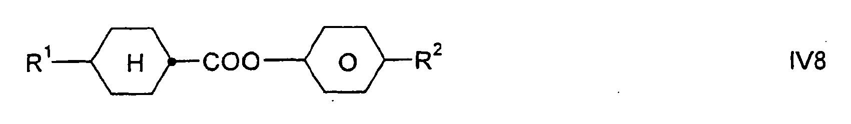 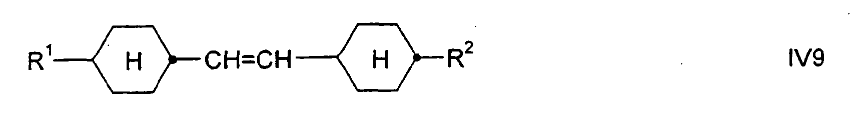 and/or one or more compounds selected from the group comprising IV10 to IV24 with three rings 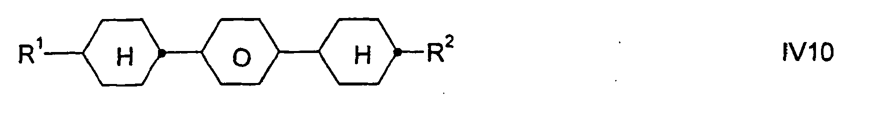 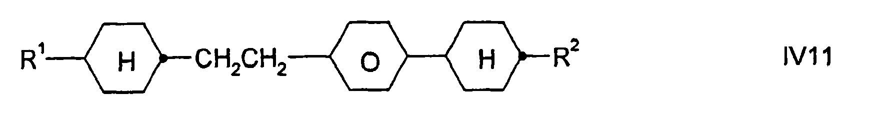 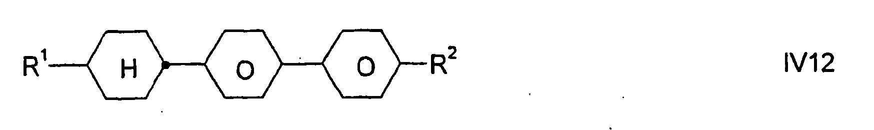 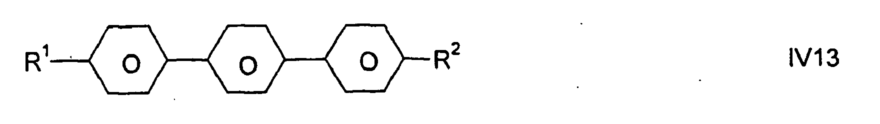 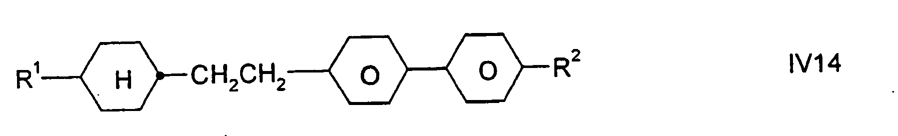 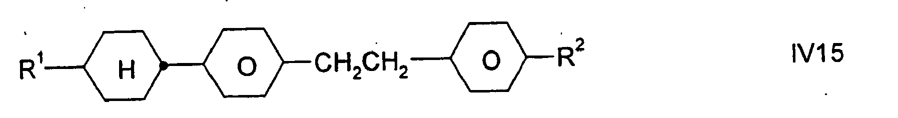 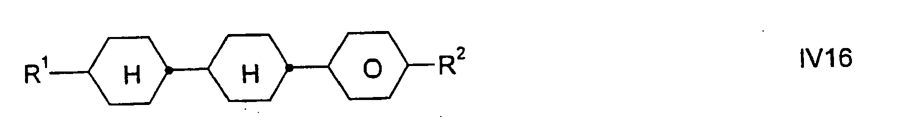 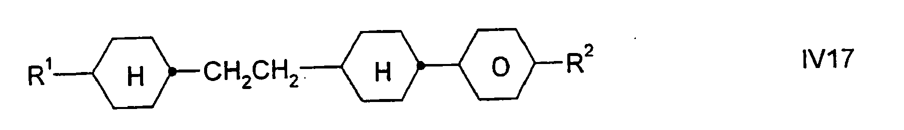 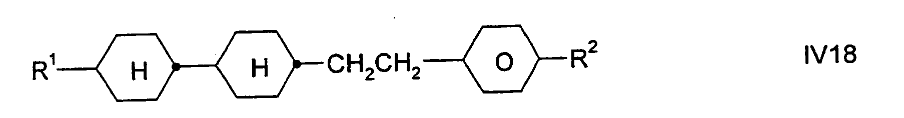 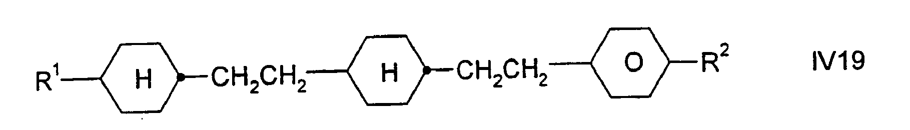 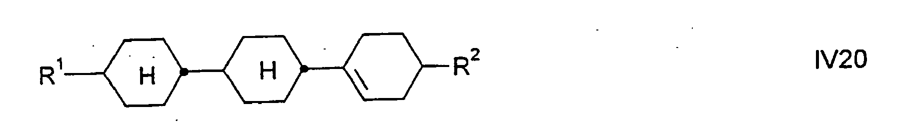 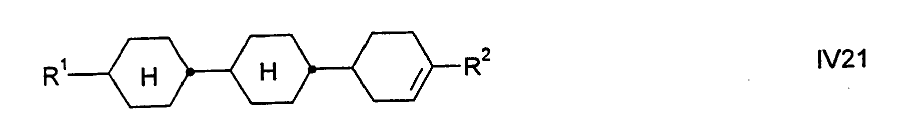 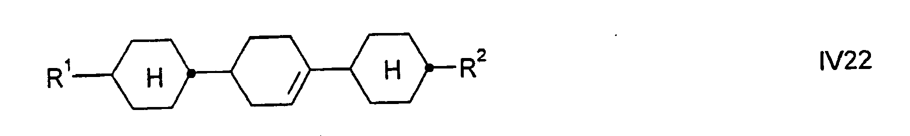 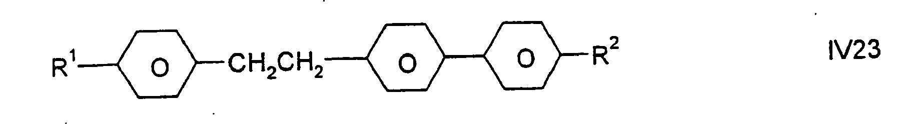 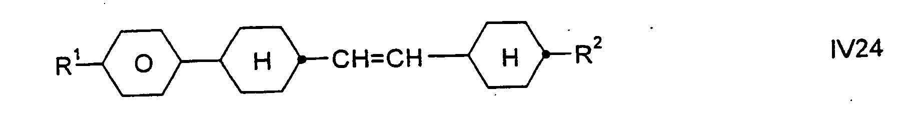 and/or one or more compounds selected from the group comprising IV10 to IV24 with three rings 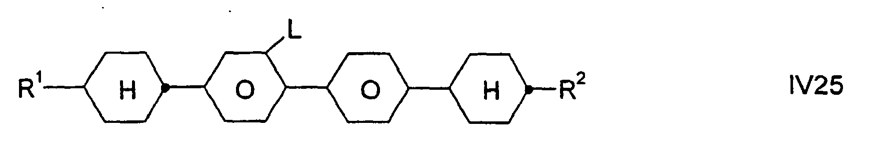 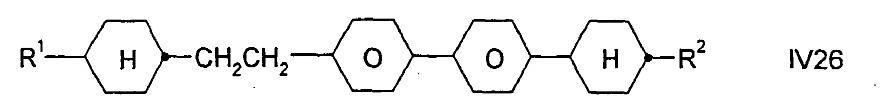 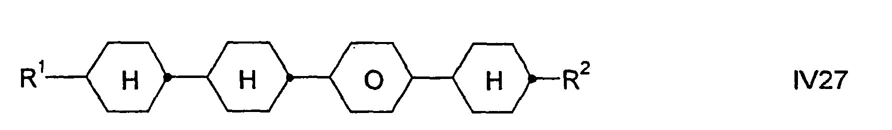 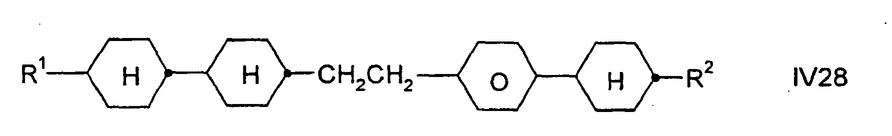 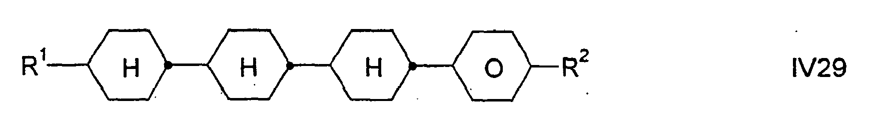 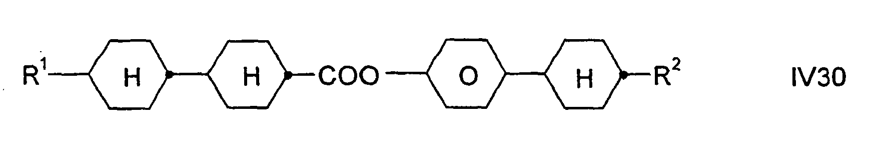 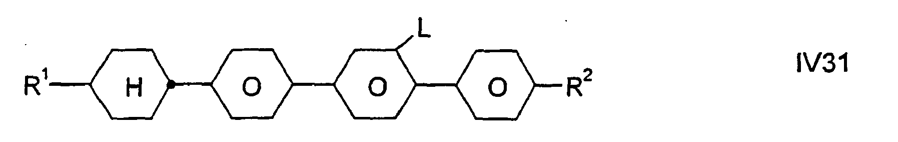 in which R¹ and R² have each independently one of the meanings given for R in formula II, L is H or F, and the 1,4-phenyl groups in IV10 to IV19 and IV23 to IV31 can also independently of each other be mono- or polysubstituted by F.

Of the compounds of formulae IV 25 to IV 31 especially preferred are those wherein R¹ is alkyl and R² is alkyl or alkoxy, each having 1 to 7 C-atoms. Further preferred are compounds of formulae IV 25 and IV 31 wherein L is F.

R¹ and R² in the compounds of formulae IV1 to IV30 is particularly preferably straight chain alkyl or alkoxy with 1 to 12 C-atoms.

The LC mixtures optionally also comprise an optically active component C, in an amount such that the ratio between the layer thickness (separation of the plane-parallel carrier plates) and the natural pitch of the chiral nematic liquid crystal mixture is more than 0.2 suitable to the desired twist angle. Suitable dopants can be selected from a wide variety of known chiral materials and commercially available dopants such as cholesteryl nonanoate, S 811 (Merck KGaA, Darmstadt, FRG) and CB 15 (Merck Ltd., former, BDH, Poole, UK). The choice thereof is not crucial per se.

The amount of compounds of component C is preferably 0 to 10 %, in particular 0 to 5 %, very preferably 0 to 3 %.

In a further preferred embodiment the LC mixtures comprise 2 to 65 %, preferably 5 to 35 % by weight of liquid crystalline tolane compounds. Thereby it is possible to reduce the cell thickness and the switching times of the STN-LCDs. The tolane compounds are preferably selected from group T comprising T1a,T1b and T2a to T2h 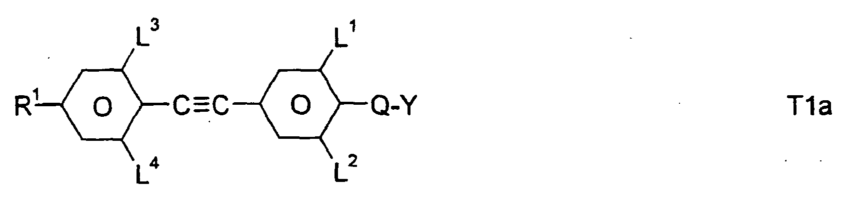 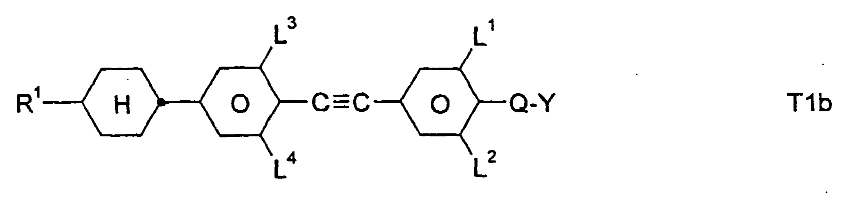 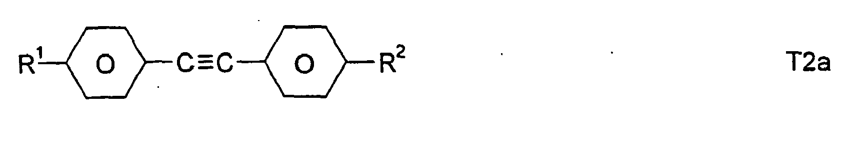 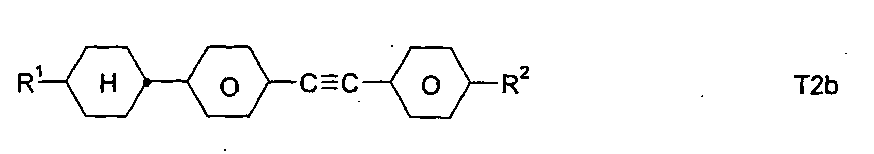 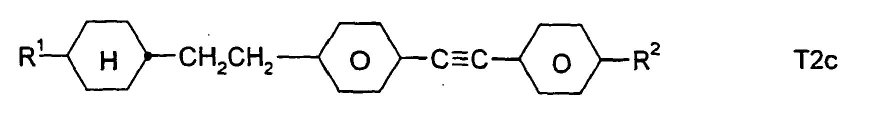 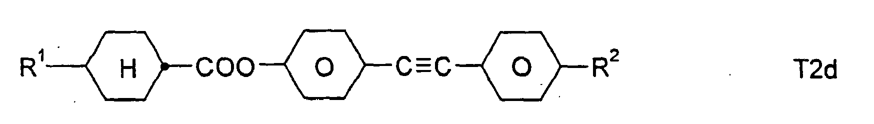 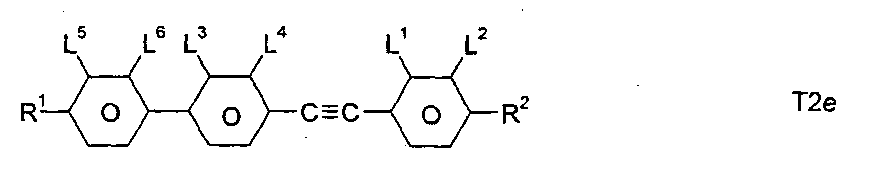 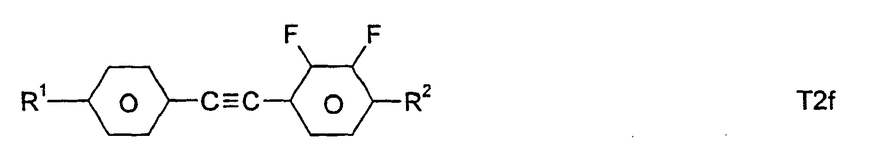 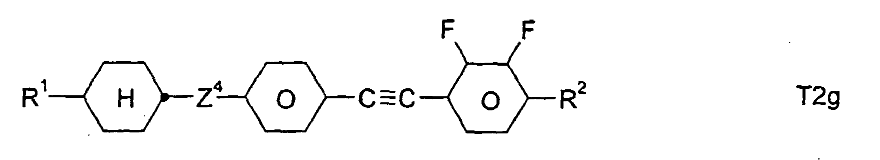 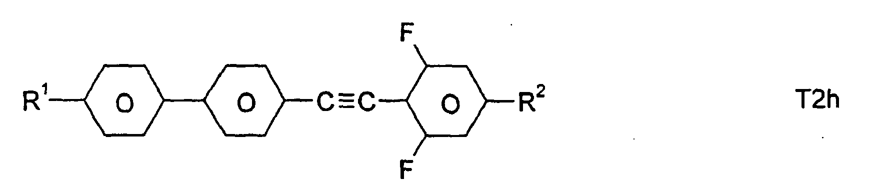 wherein R¹ has one of the meanings of R in formula II, L¹ to L⁶ are each independently H or F, and Q and Y have one of the meanings given in formula I.

Particularly preferred compounds of formula T2e are those wherein one, two or three of the groups L¹ to L⁶ are F and the others are H, with both of L¹ and L², L³ and L⁴, L⁵ and L⁶ not being at the same time F.

The proportion of component(s) from group T is preferably 2 % to 65 %, in particular 5 % to 35 %.

The liquid crystal mixtures may also comprise 0 to 10 % of one or more compounds having a dielectric anisotropy of -2 or less (component D).

The component D preferably comprises one or more compounds containing the structural element 2,3-difluoro-1,4-phenylene, such as described e.g. in DE-OS 38 07 801, 38 07 861, 38 07 863, 38 07 864 and 38 07 908. Especially preferred are tolane compounds with this structural element according to the PCT/DE 88/00133, in particular those of formulae T2f and T2g.

Further known compounds of component D are e.g. 2,3-Dicyano-hydroquinone or cyclohexane derivatives containing the structural element 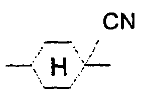 or 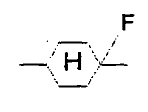 as in DE-OS 32 31 707 or DE-OS 34 07 013.

The proportion of compounds of the component D comprising one or more compounds having a dielectric anisotropy < -1.5 is preferably about 0 % to 10 %, in particular about 0 % to 5 %. Those skilled in the art can easily adjust this proportion to produce the threshold voltage desired, it being possible to use, in principle, all customary liquid-crystal compounds where Δε < -1.5.

Especially preferably the inventive displays contain no compounds of component D.

The term alkenyl in the meanings of R and R¹ to R⁴ is comprising straight chain and branched alkenyl groups, in case of R with 2 to 7 C atoms, in case of R, R², R³ and R⁴ with 2 to 12 C atoms. Straight chain alkenyl groups are preferred. Further preferred alkenyl groups are C₂-C₄-1 E-alkenyl, C₄-C₇-3E-alkenyl, C₅-C₇-4-alkenyl, C₆-C₇-5-alkenyl and C₇-6-alkenyl, in particular C₂-C₇-1E-alkenyl, C₄-C₇-3E-alkenyl and C₅-C₇-4-alkenyl.

Examples for preferred alkenyl groups are vinyl, 1 E-propenyl, 1 E-butenyl, 1E-pentenyl, 1E-hexenyl, 1E-heptenyl, 3-butenyl, 3E-pentenyl, 3E-hexenyl, 3E-heptenyl, 4-pentenyl, 4Z-hexenyl, 4E-hexenyl, 4Z-heptenyl, 5-hexenyl and 6-heptenyl. Alkenyl groups with up to 5 C atoms are particularly preferred. Very particularly preferred are vinyl, 1 E-propenyl, 1 E-butenyl, 3E-butenyl and 3E-pentenyl, in particular vinyl and 3E-butenyl.

In further particularly preferred embodiments, the liquid crystal mixtures according to the present invention contain
- at least one compound of each formula I-1 a, I-2a and I-3a 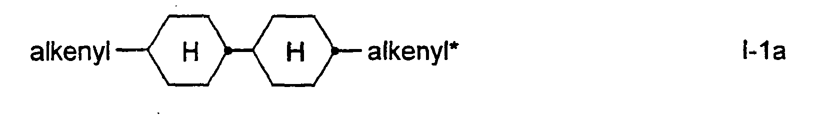 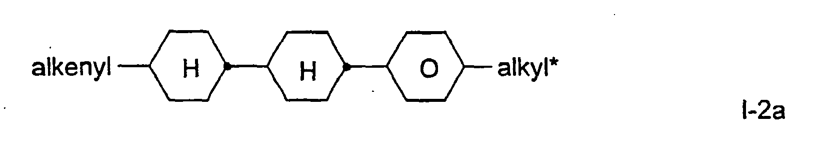 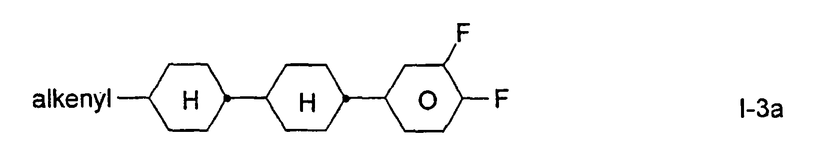 wherein alkenyl and alkenyl* are each independently an alkenyl group with 2 to 7 C atoms, and alkyl* is an alkyl group with 1, 2 or 3 C atoms,
- one or more, preferably two to six, compounds of formulae IIa and IIb,
- 11 to 55 %, preferably 18 to 42 % by weight of one or more, in particular three to five, alkenyl compounds of formula I,
- 12 to 24 % by weight of one or more, in particular one or two, polar alkenyl compounds of formula 1-3,
- 11 to 44 %, preferably 16 to 32 % by weight of one or more, in particular two to six, compounds having 3,4,5-trifluorophenyl group, which are especially preferably selected of formula II,
- 12 to 48 %, preferably 18 to 36 % by weight of one or more, in particular two to six, compounds of formula III having a terminal cyano group, which are especially preferably selected of formulae IIIb and IIIc,
- 2 to 16 %, preferably 3 to 9 % by weight of one or more, in particular one or two, pyrimidine compounds of formula V,
- 2 to 35 %, preferably 5 to 20 % by weight of one or more, in particular two to four, tolane compounds of group T, which are especially preferably selected from formulae T2a and T2b,

Further preferred embodiments relate to liquid crystal mixtures that
- contain a total of 4 to 10 compounds of formulae I and II, with the amount of these compounds being 25 to 70 %, preferably 35 to 65 % by weight of the total mixture,
- contain more than 58 % by weight of compounds having a positive dielectric anisotropy, in particular having a dielectric anisotropy of more than + 12,
- contain no compounds of component B of formulae IV-1 to IV-31 and/or no compounds of component D,
- essentially consist of compounds of formulae I, II, III, V and compounds of group T,

The inventive mixtures are characterized, especially when used in STN-LCDs with large cell gaps, by their low total switching times (tₜₒₜ = tₒₙ + t_{off}). Low switching times are an especially important requirement for STN-LCDs e.g. when used in laptops, to allow better displaying of the cursor movements. Especially preferred are displays having switching times of 300 msec or less, in particular 250 msec or less.

The inventive STN-LCDs are characterized by a low threshold voltage. Preferably the threshold voltage is 1.5 V or less, in particular 1.35 V or less.

The liquid crystal mixtures in the inventive STN-LCDs are dielectrically positive with Δε ≥ 1.5. Particularly preferred are mixtures with Δε ≥ 3, very particularly preferred mixtures with △ε≥5.

The inventive liquid crystal mixtures exhibit advantageous values of the threshold voltage V_{10/0/20} and of the rotational viscosity γ₁. If the value for the optical path difference d · Δn is fixed, the value for the cell gap d is determined by the optical anisotropy Δn. In particular in case of high values of d · Δn, the use of liquid crystal mixtures according to the present invention with a higher value of Δn is preferred, since in this case the value for d can be chosen to be comparatively small, leading to improved values of the switching time. However, inventive liquid crystal displays comprising inventive liquid crystal mixtures with smaller values of Δn, too, are characterized by advantageous values of the switching times.

The liquid crystal mixtures according to the present invention are further characterized by their advantageous values of the steepness, and, in particular at temperatures above 20 °C, can be driven at high multiplex rates. Furthermore, the mixtures exhibit a high stability, a high electrical resistance and a low frequency dependency of the threshold voltage. The liquid crystal displays according to the present invention show a broad working temperature range and a good viewing angle dependency of the contrast.

The construction of the liquid-crystal display elements according to the present invention from polarizers, electrode base plates and electrodes having a surface treatment such that the preferential orientation (director) of the liquid-crystal molecules in each case adjacent thereto is usually mutually twisted from one electrode to the other by a value of 160 ° to 720 °, corresponds to the customary construction for display elements of this type. The term customary construction here is used in broad terms and also includes all derivatives and modifications of supertwist cells, in particular also matrix display elements. The surface tilt angle at the two support plates may be identical or different. Identical tilt angles are preferred.

In TN-displays according to the invention the tilt angle between the long axes of the molecules at the surface of the base plates and the base plate is preferably in the range from 0° to 7°, in particular from 0,01° to 5°, very preferably from 0,1 to 2°. In STN-displays according to the invention the tilt angle is preferably in the range from 1° to 30°, in particular from 1° to 12°, very preferably from 3° to 10°.

The twist angle of the liquid crystal mixture between the alignment layers on the two base plates of the cell is in case of inventive TN-displays in the range from 22,5° to 170°, in particular from 45° to 130°, very preferably from 80° to 115°. In case of STN-displays the twist angle is in the range from 100° to 600°, in particular from 170° to 300°, very preferably from 180° to 270°.

An essential difference between the display elements accordding to the invention and the display elements customary hitherto based on the twisted nematic cell is, however, the choice of liquid-crystal components in the liquid-crystal layer.

The liquid-crystal mixtures which can be used according to the invention are prepared in a manner customary per se. In general, the desired amount of the components used in a relatively small amount is dissolved in the components making up the principal constituent, expediently at elevated temperature. It is also possible to mix solutions of the components in an organic solvent, for example in acetone, chloroform or methanol, and to remove the solvent again, after mixing, for example by distillation.

The dielectrics may also contain further additives known to those skilled in the art and described in the literature. For example, 0-15 % of pleochroic dyes may be added.

The examples below are intended to illustrate the invention, without representing any limitation whatsoever.

The abbreviations have the following meanings:
- Δn: birefringence at 589 nm and 20 °C,
- Tₐᵥₑ: average switching time = 0.5 (Tₒₙ + T_{off}),
- Tₒₙ: time from switching on until 90 % of the maximum contrast is reached,
- T_{off}: time from switching off until 10 % of the maximum contrast is reached,
- V₁₀: threshold voltage (volt) at a frequency of 50 Hz,
- V₉₀: saturation voltage (volt) at a frequency of 50 Hz,
- V₉₀/V₁₀: steepness,
- γᵣₒₜ: rotational viscosity (mPa·s),
- ν: flow viscosity at 20 °C (mm²s⁻¹),
- HTP: helical twisting power of the chiral dopant S-811 at 20 °C (µm⁻¹),
- d·Δn: optical retardation at 20 °C (µm),
- d/P: ratio of cell gap versus cholesteric pitch at 20 °C : 0.54 for a twist of 240°, if not explicitly stated otherwise and
- Twist: twist angle between the surfaces: 240°, if not explicitly stated otherwise.

In the foregoing and the following, unless indicated otherwise, all temperatures are in degree Celsius and percentages are % by weight. The values for switching times and viscosities are related to 20 °C. The switching time is the average value tₐᵥₑ as defined above.

The STN-LCD is addressed in multiplex operation (multiplex ratio 1:240, bias 1:15).

The concentrations of the constituents of the liquid crystalline mixtures are given without consideration of the chiral dopant used. The concentration of the chiral dopant is chosen to achieve the desired value of d/P, wherein the cell gap d is determined via the birefingence of the liquid crystalline mixture from the optical retardation d·Δn. All examples given use the chiral dopant S-811, available from Merck KGaA, unless explicitly stated othewise.

In the present patent application and in the following examples all chemical structures of LC compounds are given by acronyms the transformation of which into chemical formulae is done as shown in the following. All residues CₙH₂ₙ₊₁ and CₘH₂ₘ₊₁ are straight-chained alkyl groups with n resp. m carbon atoms. The code of Table B is self-explanatory. In Table A only the acronym for the core structure is given. In a concrete compound this acronym is followed by a dash and a code for the substituents R¹, R², L¹ and L² as follows:

The compounds given in Tables A and B are particularly preferred components of the present invention.

| Code for R¹, R², L¹, L² | R¹ | R² | L¹ | L² |
|---|---|---|---|---|
| nm | CₙH₂ₙ₊₁ | CₘH₂ₘ₊₁ | H | H |
| nom | CₙH₂ₙ₊₁ | OCₘH₂ₘ₊₁ | H | H |
| nO.m | OCₙH₂ₙ₊₁ | CₘH₂ₘ₊₁ | H | H |
| n | CₙH₂ₙ₊₁ | CN | H | H |
| nN.F | CₙH₂ₙ₊₁ | CN | H | F |
| nN.F.F | CₙH₂ₙ₊₁ | CN | F | F |
| nF | CₙH₂ₙ₊₁ | F | H | H |
| nOF | OCₙH₂ₙ₊₁ | F | H | H |
| nCl | CₙH₂ₙ₊₁ | Cl | H | H |
| nF.F | CₙH₂ₙ₊₁ | F | H | F |
| nF.F.F | CₙH₂ₙ₊₁ | F | F | F |
| nOmFF | CₙH₂ₙ₊₁ | OCₘH₂ₘ₊₁ | F | F |
| nmF | CₙH₂ₙ₊₁ | CₘH₂ₘ₊₁ | F | F |
| nCF3 | CₙH₂ₙ₊₁ | CF₃ | H | H |
| nOCF₃ | CₙH₂ₙ₊₁ | OCF₃ | H | H |
| nOCF₂ | CₙH₂ₙ₊₁ | OCHF₃ | H | H |
| nF.Cl | CₙH₂ₙ₊₁ | Cl | H | F |
| n-V | CₙH₂ₙ₊₁ | -CH=CH₂ | H | H |
| Vn-m | -CH=CH-CₙH₂ₙ₊₁ | CₘH₂ₘ₊₁ | H | H |

**Table A:**

| (L¹, L², L³; H or F) | |
|---|---|
| 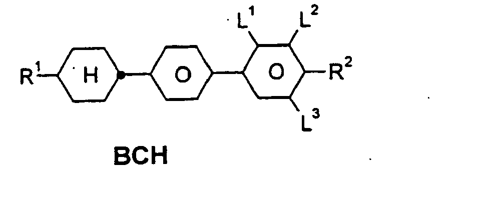 | 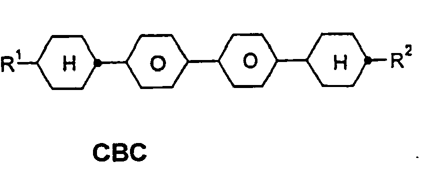 |
| 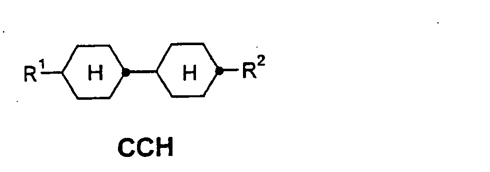 | 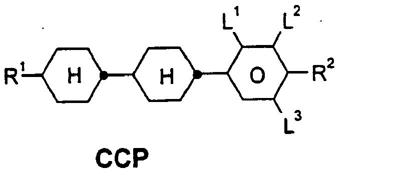 |
| 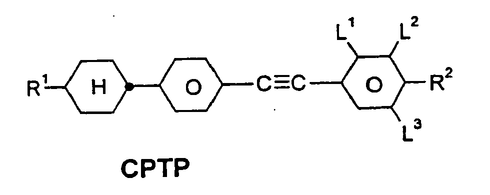 | 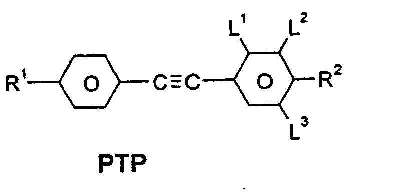 |
| 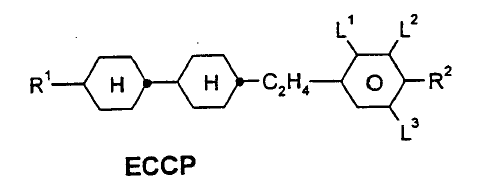 | 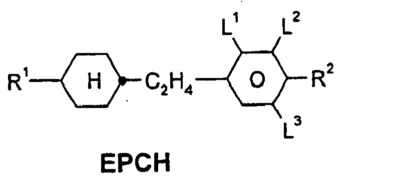 |
| 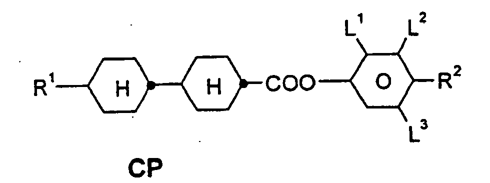 | 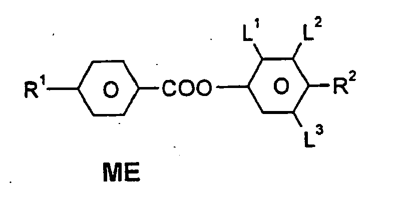 |
| 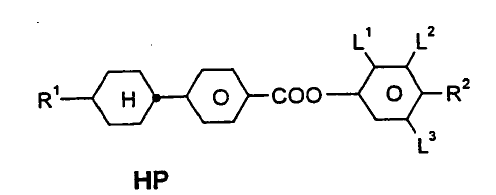 | 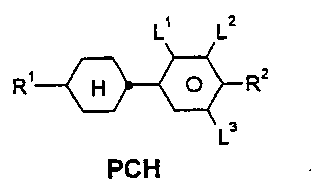 |
| 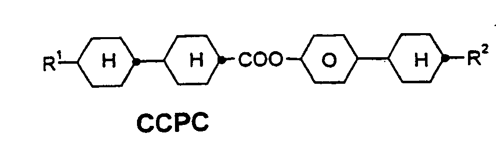 | |

**Table B:**

| | |
|---|---|
| 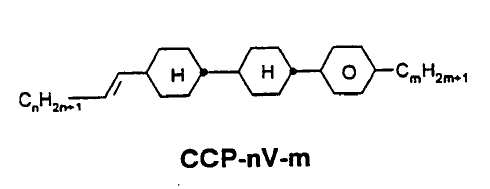 | 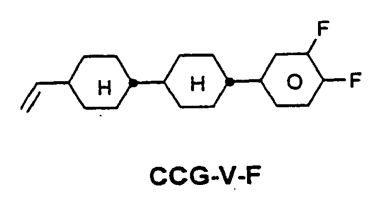 |
| 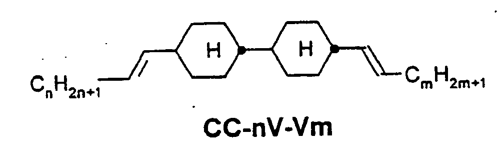 | 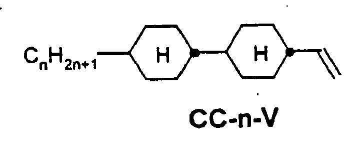 |
| 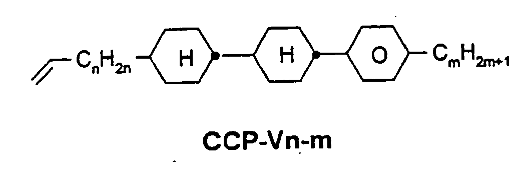 | 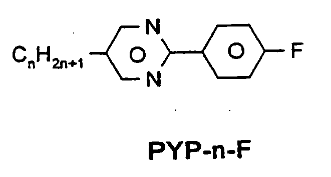 |
| 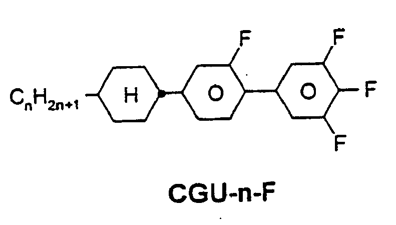 | 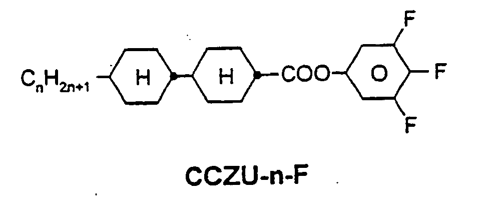 |
| 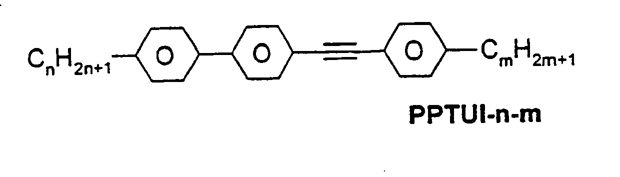 | |

### Example 1

A STN display contains a liquid crystalline medium with the following properties:

| | |
|---|---|
| Clearing point | + 75 °C |
| Δn(20 °C, 589 nm) | 0.1373 |
| V₁₀(20 °C) | 1.25 V |
| V₉₀/V₁₀(20 °C) | 1.082 |
| Tₐᵥₑ(20 °C) | 220 msec |

| consisting of | c |
|---|---|
| PCH-3N.F.F | 18.00 % |
| ME2N.F | 2.00 % |
| ME3N.F | 3.00 % |
| ME4N.F | 8.00 % |
| PYP-5-F | 4.00 % |
| CC-1V-V1 | 6.50 % |
| CCG-V-F | 16.00 % |
| CCP-V-1 | 6.00 % |
| PTP-102 | 3.50 % |
| CPTP-301 | 5.50 % |
| CPTP-302 | 5.50 % |
| CPTP-303 | 5.00 % |
| CCZU-2-F | 2.00 % |
| CCZU-3-F | 8.00 % |
| CCZU-5-F | 2.00 % |
| CGU-3-F | 5.00 % |
| Σ | 100.00 % |

### Example 2

A STN display contains a liquid crystalline medium with the following properties:

| | |
|---|---|
| Clearing point | + 75 °C |
| Δn(20 °C, 589 nm) | 0.1181 |
| V₁₀(20 °C) | 1.31 V |
| V₉₀/V₁₀(20 °C) | 1.070 |
| Tₐᵥₑ(20 °C) | 244 msec |

| consisting of | c |
|---|---|
| PCH-3N.F.F | 16.00 % |
| ME2N.F | 2.00 % |
| ME3N.F | 3.00 % |
| ME4N.F | 7.50 % |
| PYP-5-F | 4.00 % |
| CC-1V-V1 | 3.00 % |
| CCG-V-F | 16.00 % |
| CCP-V-1 | 9.50 % |
| CCP-V2-1 | 9.00 % |
| CPTP-301 | 3.00 % |
| CPTP-302 | 3.00 % |
| CCZU-2-F | 3.00 % |
| CCZU-3-F | 11.00 % |
| CCZU-5-F | 3.00 % |
| CGU-3-F | 5.00 % |
| Σ | 100.00 % |

## Claims

1. Supertwist nematic liquid-crystal display containing
- two plane-parallel outer plates which, together with a frame, form a cell,
- a nematic liquid-crystal mixture of positive dielectric anisotropy which is present in the cell,
- electrode layers with superposed alignment layers on the insides of the outer plates which address each pixel by orthogonal row wave forms,
- pre-tilt angle between the longitudinal axis of the molecules at the surface of the outer plates and the outer plates of from about 1 degree to 30 degrees, and
- a twist angle of the liquid-crystal mixture in the cell from alignment layer to alignment layer with a value of between 22.5 and 600°, wherein the nematic liquid-crystal mixture essentially consists of
a) 30-90 % by weight of a liquid-crystalline component A, comprising one or more compounds having a dielectric anisotropy of more than +1.5;
b) 10- 45 % by weight of a liquid-crystalline component B, comprising one or more compounds having a dielectric anisotropy from -1.5 to +1.5;
c) 0-10 % by weight of a liquid-crystalline component D, comprising one or more compounds having a dielectric anisotropy of less than -1.5, and
d) an optically active component C in such an amount that the ratio between the layer thickness (separation of the plane-parallel outer plates) and the natural pitch of the chiral nematic liquid-crystal mixture is from about 0.2 to 1.3,
**characterized in that** the liquid crystal mixture comprises at least one compound of component A having a 3,4,5-trifluorophenyl group
and component A further comprises one or more compounds of formula IIIb2 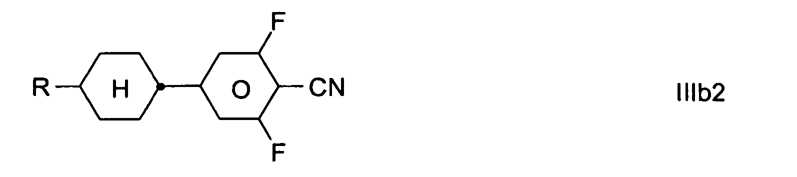 wherein
R is an optionally fluorinated alkyl, alkoxy, alkenyl or alkenyloxy group with 1 to 12 C atoms, wherein one or two non-adjacent CH₂ groups can be replaced by -O-, -CH=CH-, -CO-, -OCO- or -COO- in such a manner that O atoms are not directly adjacent to one another,
at least one compound of formula I 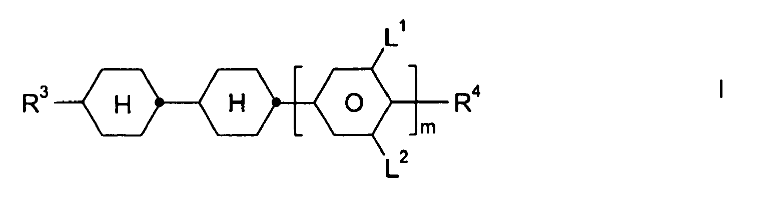 wherein
R³ is an alkenyl group with 2 to 7 C atoms,
R⁴ is an optionally fluorinated alkyl, alkoxy, alkenyl or alkenyloxy group with 1 to 12 C atoms, wherein one or two non-adjacent CH₂ groups can be replaced by -O-, -CH=CH-, -CO-, -OCO- or -COO- in such a manner that O atoms are not directly adjacent to one another, or, in case m = 1, R⁴ can also be Q-Y,
Q is CF₂, OCF₂, CFH, OCFH or a single bond,
Y is F or Cl,
L¹ and L² are each independently H or F,
m is 0 or 1
and at least one compound of formula IIb 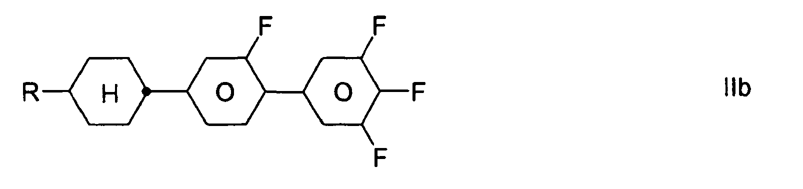 wherein R has the meaning given above.

2. Display according to claim 1, **characterized in that** component A further comprises one or more compounds of formula III selected from the group of formulae 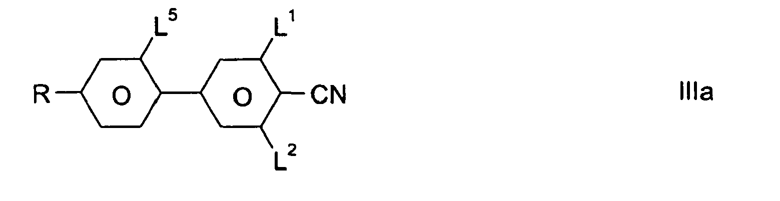 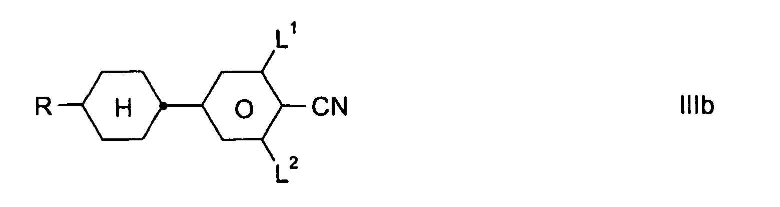 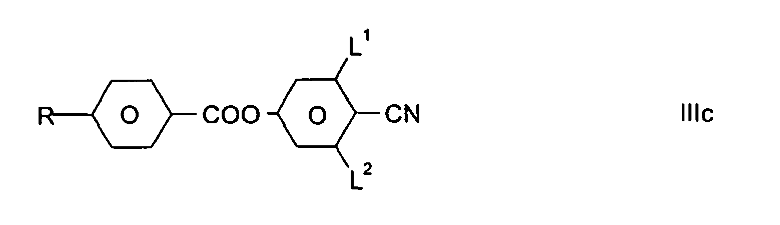 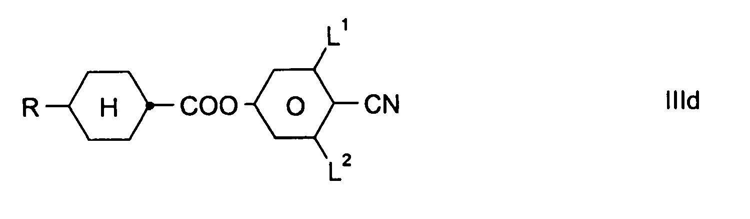 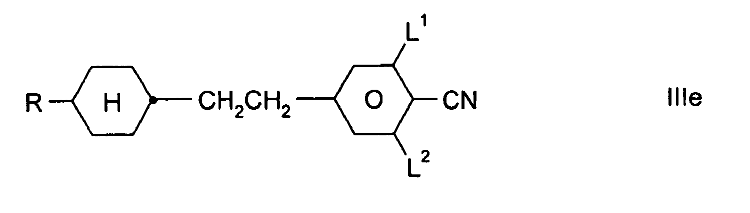 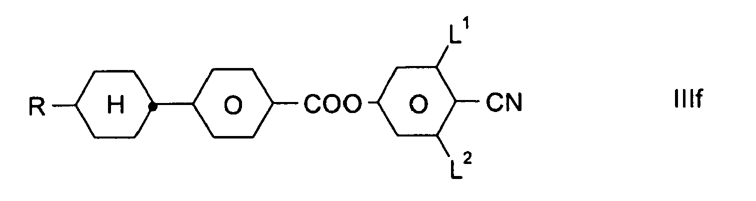 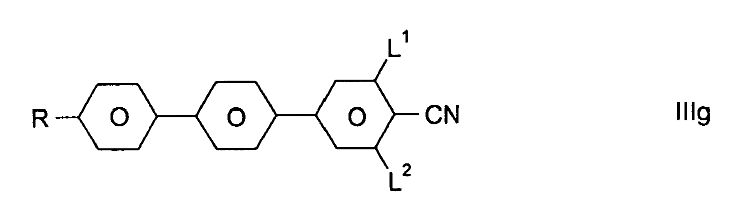 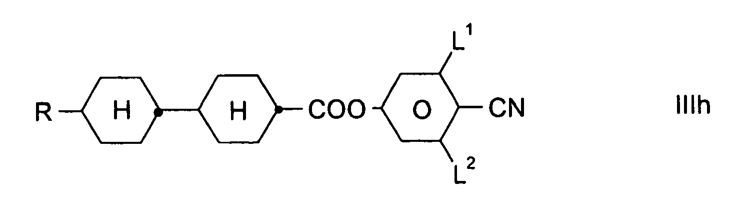 wherein R is as defined for formula IIIb2 in claim 1 and
L¹, L² and L⁵ are each independently H or F.
and from which compounds of formula IIIb2 are excluded.

3. Display according to at least one of claims 1 and 2, **characterized in that** component A comprises one or more compounds of formula III2b
wherein R is an alkyl group.

4. Display according to at least one of claims 1 to 3, **characterized in that** component A comprises one or more compounds of formula IIIc 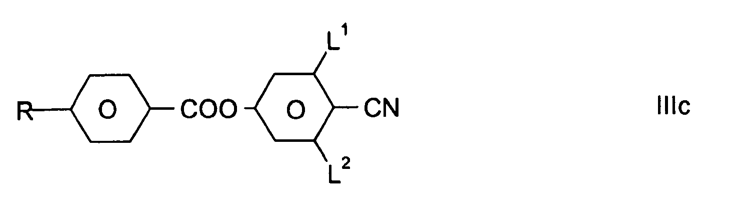 wherein R is an alkyl group and
L¹ and L² are each independently H or F.

5. Display according to at least one of claims 1 to 4, **characterized in that** component A further comprises one or more compounds of formula II 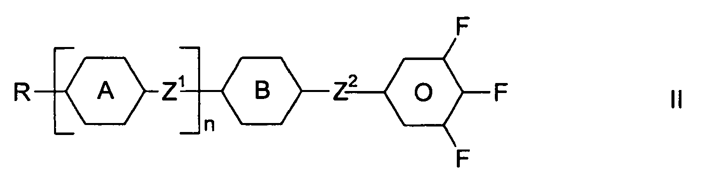 wherein
R is an optionally fluorinated alkyl, alkoxy, alkenyl or alkenyloxy group with 1 to 12 C atoms, wherein one or two non-adjacent CH₂ groups can be replaced by -O-, -CH=CH-, -CO-, -OCO- or -COO- in such a manner that O atoms are not directly adjacent to one another, 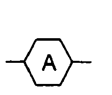 and 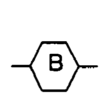 are each independently 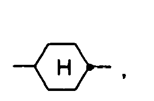 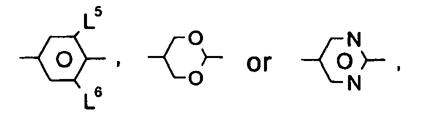
L⁵ and L⁶ are each independently H or F,
Z¹ and Z² are independently of each other -COO-, -CH₂CH₂-, -CH=CH-, -C=C- or a single bond, and
n is 0, 1 or 2, from which compounds of formulae I and IIb are excluded.

6. Display according to at least one of claims 1 to 5, **characterized in that** component A further comprises one or more compounds of formula II selected from the group of the following formulae 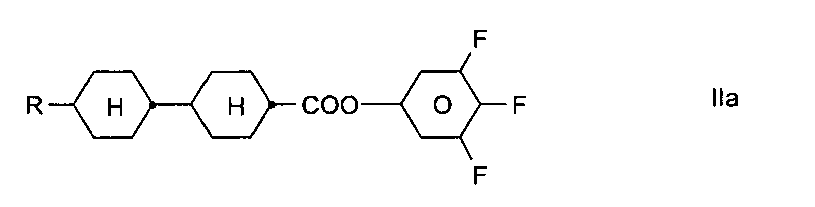 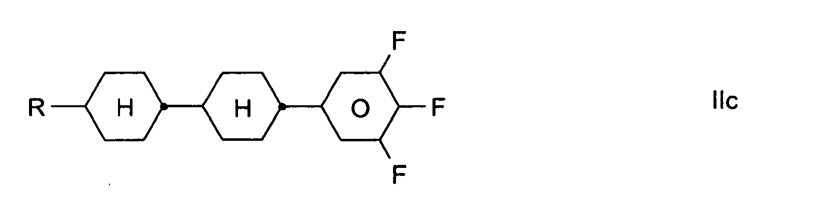 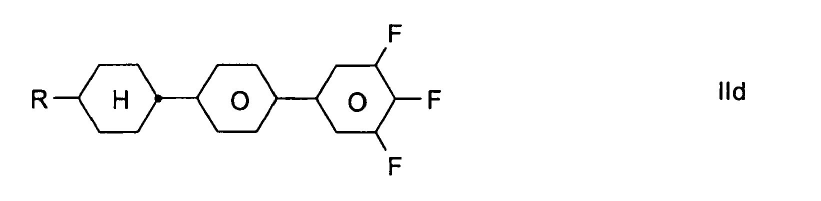 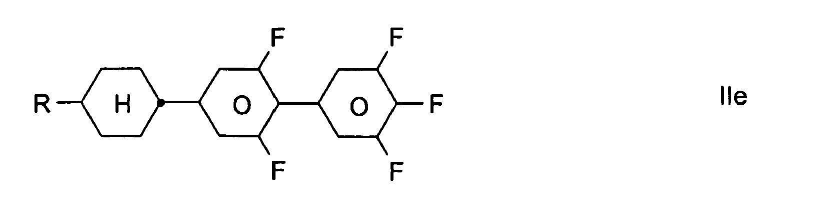 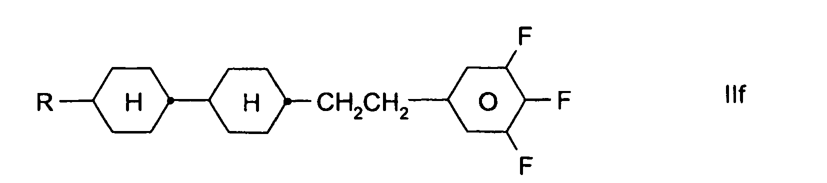 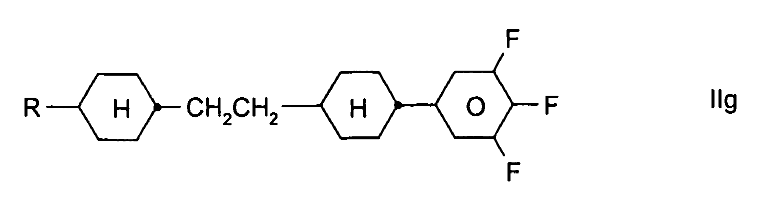 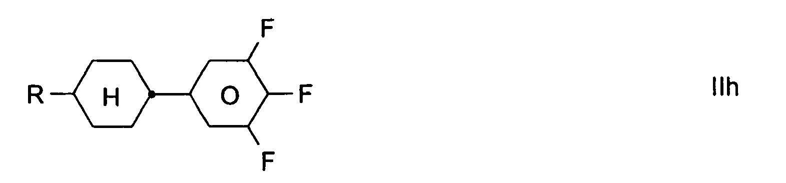 wherein R is as defined in claim 1.

7. Display according to at least one of claims 1 to 6, **characterized in that** the component A comprises one or more compounds of formula IIa 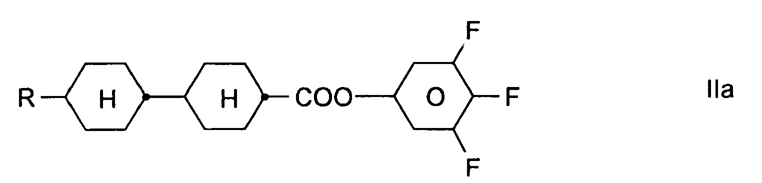 wherein R is as defined in claim 1.

8. Display according to at least one of claims 1 to 7, **characterized in that** the liquid crystal mixture further comprises one or more compounds of formula V 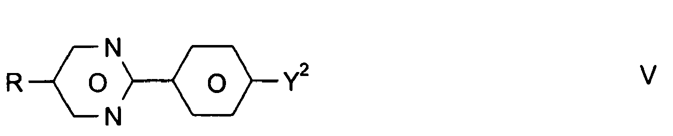 wherein R has the meaning given in claim 1 and Y² is F or Cl.

9. Display according to at least one of claims 1 to 8, **characterized in that** the liquid crystal mixture contains 11 to 44 % by weight of one or more compounds having a 3,4,5-trifluorophenyl group.

10. Display according to at least one of claims 1 to 9, **characterized in that** the liquid crystal mixture comprises more than 58 % by weight of one or more compounds having a positive dielectric anisotropy of more than +12.

11. Display according to at least one of claims 1 to 10, **characterized in that** it has a threshold voltage of 1.5 V or less.

12. Liquid crystal mixture or composition as defined in at least one of claims 1 to 11.

## Patentansprüche

1. Supertwist nematische Flüssigkristallanzeige mit
- zwei planparallelen Trägerplatten, die zusammen mit einer Umrandung eine Zelle bilden,
- einer in der Zelle befindlichen nematischen Flüssigkristallmischung mit positiver dielektrischer Anisotropie,
- Elektrodenschichten mit darüberliegenden Orientierungsschichten auf den Innenseiten der Trägerplatten, die jedes Pixel durch orthogonale Reihenwellenformen ansprechen,
- einem Anstellwinkel zwischen der Längsachse der Moleküle an der Oberfläche der Trägerplatten und den Trägerplatten von etwa 1 Grad bis 30 Grad und
- einem Verdrillungswinkel der Flüssigkristallmischung in der Zelle von Orientierungsschicht zu Orientierungsschicht dem Betrag nach zwischen 22,5 und 600°, wobei die nematische Flüssigkristallmischung im Wesentlichen besteht aus
a) 30-90 Gew.-% einer flüssigkristallinen Komponente A, enthaltend eine oder mehrere Verbindungen mit einer dielektrischen Anisotropie von über +1,5;
b) 10-45 Gew.-% einer flüssigkristallinen Komponente B, enthaltend eine oder mehrere Verbindungen mit einer dielektrischen Anisotropie von -1,5 bis +1,5;
c) 0-10 Gew.-% einer flüssigkristallinen Komponente D, enthaltend eine oder mehrere Verbindungen mit einer dielektrischen Anisotropie von unter -1,5 und
d) einer optisch aktiven Komponente C in einer solchen Menge, dass das Verhältnis zwischen Schichtdicke (Abstand der planparallelen Trägerplatten) und natürlicher Ganghöhe der chiralen nematischen Flüssigkristallmischung etwa 0,2 bis 1,3 beträgt,
**dadurch gekennzeichnet, dass** die Flüssigkristallmischung mindestens eine Verbindung der Komponente A mit einer 3,4,5-Trifluorphenylgruppe enthält
und die Komponente A weiter eine oder mehrere Verbindungen der Formel IIIb2 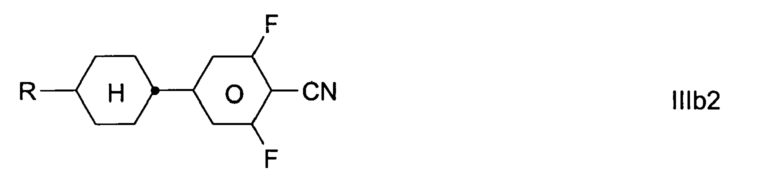 worin
R eine gegebenenfalls fluorierte Alkyl-, Alkoxy-, Alkenyl- oder Alkenyloxygruppe mit 1 bis 12 C-Atomen bedeutet, worin eine oder zwei nicht benachbarte CH₂-Gruppen durch -O-, -CH=CH-, -CO-, -OCO- oder -COO- so ersetzt sein können, dass O-Atome einander nicht direkt benachbart sind,
mindestens eine Verbindung der Formel I 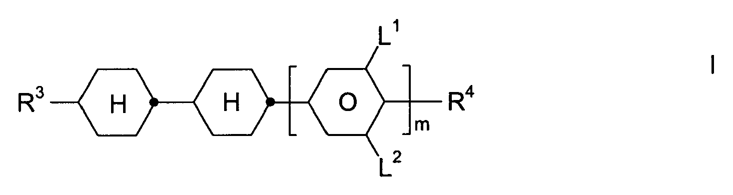 worin
R³ eine Alkenylgruppe mit 2 bis 7 C-Atomen bedeutet,
R⁴ eine gegebenenfalls fluorierte Alkyl-, Alkoxy-, Alkenyl- oder Alkenyloxygruppe mit 1 bis 12 C-Atomen bedeutet, worin eine oder zwei nicht benachbarte CH₂-Gruppen durch -O-, -CH=CH-, -CO-, -OCO- oder -COO- so ersetzt sein können, dass O-Atome einander nicht direkt benachbart sind, oder, wenn m = 1 ist, R⁴ auch Q-Y bedeuten kann,
Q CF₂, OCF₂, CFH, OCFH oder eine Einfachbindung bedeutet,
Y F oder Cl bedeutet,
L¹ und L² jeweils unabhängig H oder F bedeuten,
m 0 oder 1 bedeutet,
und mindestens eine Verbindung der Formel IIb 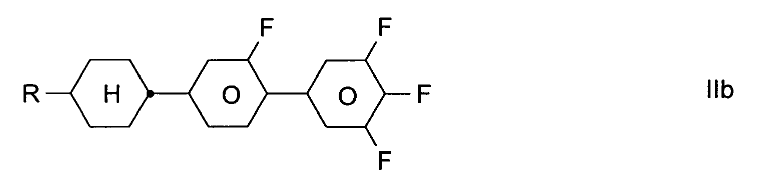 worin R die oben angegebene Bedeutung besitzt,
enthält.

2. Anzeige nach Anspruch 1, **dadurch gekennzeichnet, dass** die Komponente A weiter eine oder mehrere Verbindungen der Formel III ausgewählt aus der Gruppe der Formeln 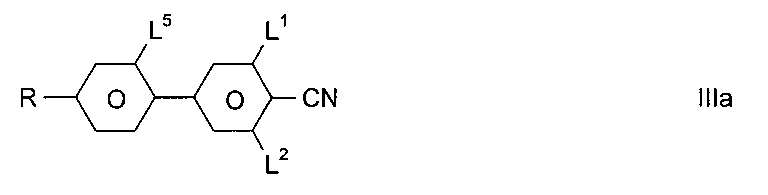 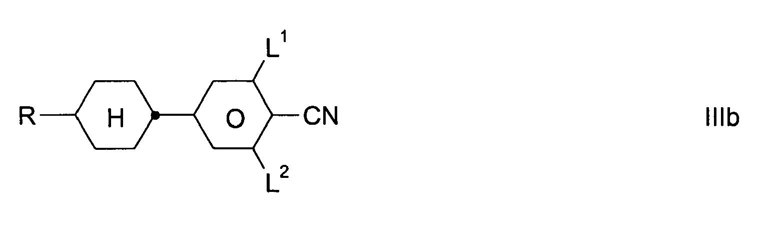 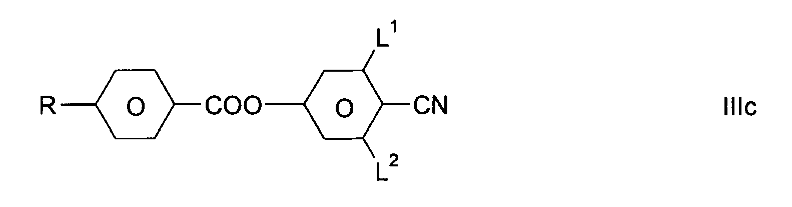 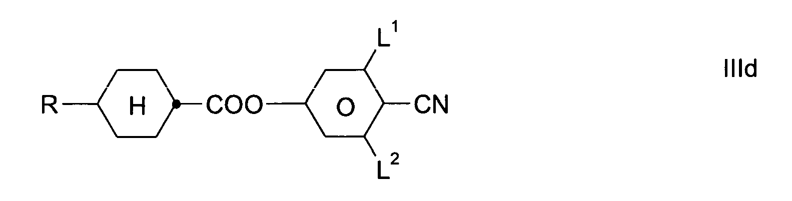 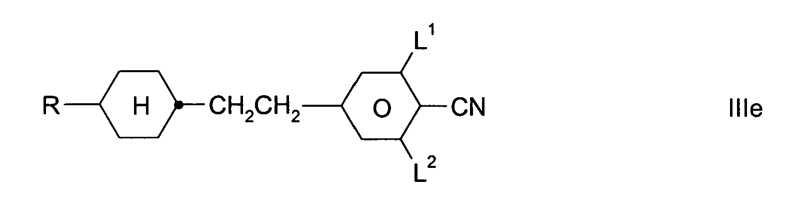 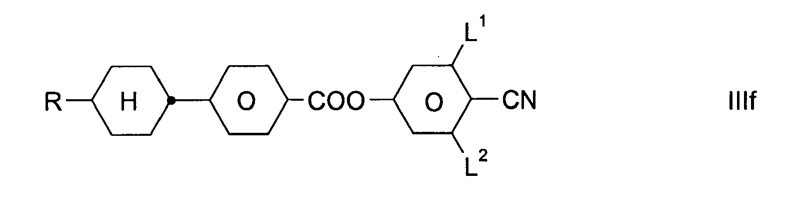 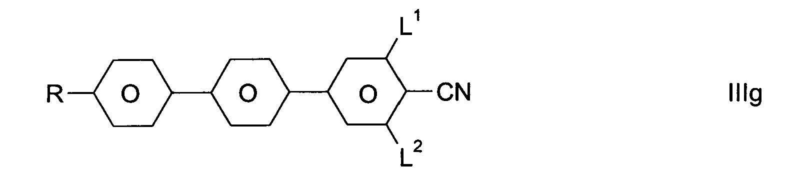 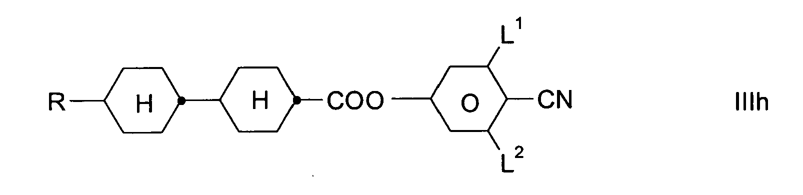 enthält, worin R wie für Formel IIIb2 in Anspruch 1 definiert ist und L¹, L² und L⁵ jeweils unabhängig H oder F bedeuten
und von denen Verbindungen der Formel IIIb2 ausgeschlossen sind.

3. Anzeige nach mindestens einem der Ansprüche 1 und 2, **dadurch gekennzeichnet, dass** die Komponente A eine oder mehrere Verbindungen der Formel IIIb2 enthält,
worin R eine Alkylgruppe bedeutet.

4. Anzeige nach mindestens einem der Ansprüche 1 bis 3, **dadurch gekennzeichnet, dass** die Komponente A eine oder mehrere Verbindungen der Formel IIIc 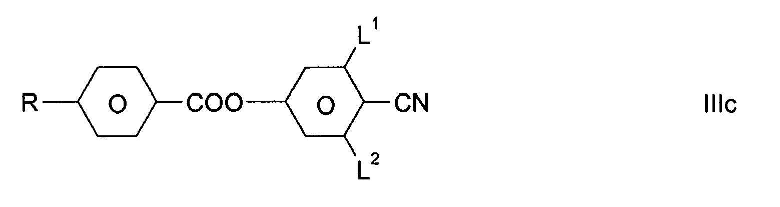 enthält, worin R eine Alkylgruppe bedeutet und
L¹ und L² jeweils unabhängig H oder F bedeuten.

5. Anzeige nach mindestens einem der Ansprüche 1 bis 4, **dadurch gekennzeichnet, dass** die Komponente A weiter eine oder mehrere Verbindungen der Formel II 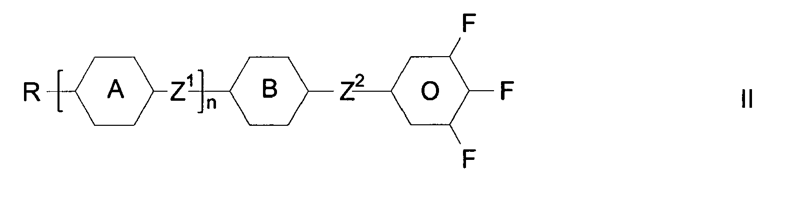 enthält, worin
R eine gegebenenfalls fluorierte Alkyl-, Alkoxy-, Alkenyl- oder Alkenyloxygruppe mit 1 bis 12 C-Atomen bedeutet, worin eine oder zwei nicht benachbarte CH₂-Gruppen durch -O-, -CH=CH-, -CO-, -OCO- oder -COO- so ersetzt sein können, dass O-Atome einander nicht direkt benachbart sind, 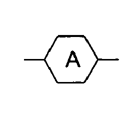 und jeweils unabhängig 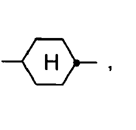 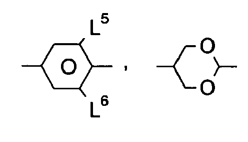 oder 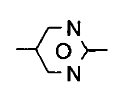 bedeuten,
L⁵ und L⁶ jeweils unabhängig H oder F bedeuten,
Z¹ und Z² unabhängig voneinander -COO-, -CH₂CH₂-, -CH=CH-, -C≡C- oder eine Einfachbindung bedeuten und
n 0, 1 oder 2 bedeutet, von denen Verbindungen der Formeln I und IIb ausgeschlossen sind.

6. Anzeige nach mindestens einem der Ansprüche 1 bis 5, **dadurch gekennzeichnet, dass** die Komponente A weiter eine oder mehrere Verbindungen der Formel II ausgewählt aus der Gruppe der folgenden Formeln 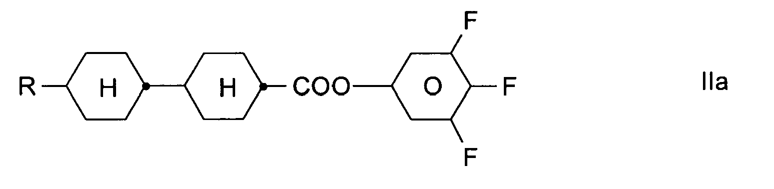 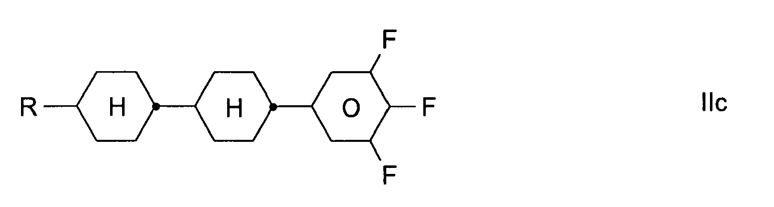 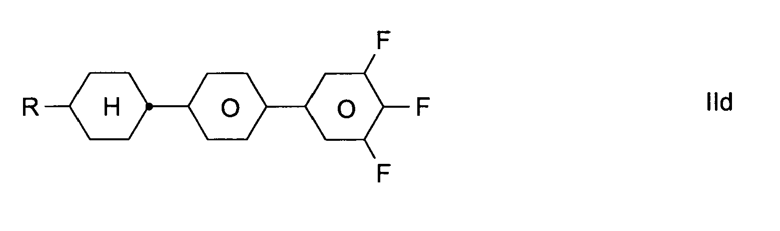 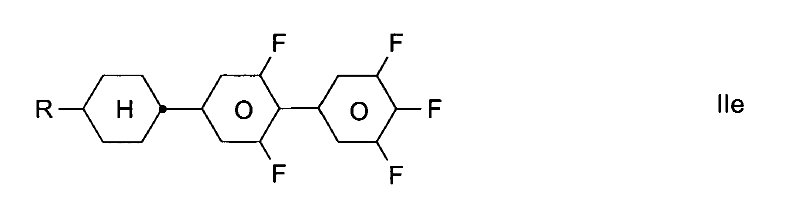 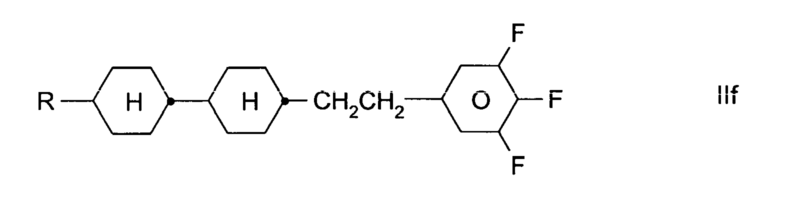 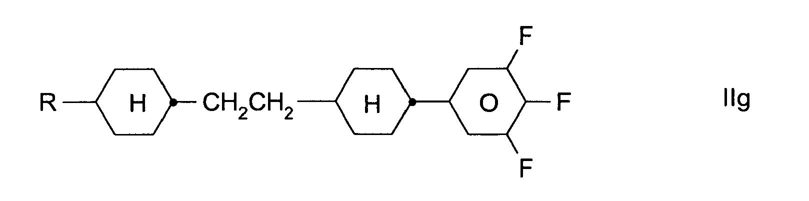 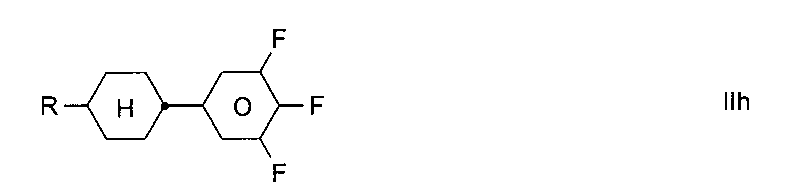 enthält, worin R wie in Anspruch 1 definiert ist.

7. Anzeige nach mindestens einem der Ansprüche 1 bis 6, **dadurch gekennzeichnet, dass** die Komponente A eine oder mehrere Verbindungen der Formel IIa 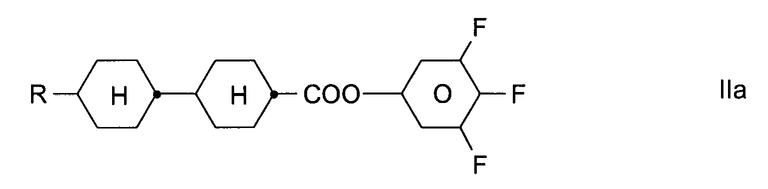 enthält, worin R wie in Anspruch 1 definiert ist.

8. Anzeige nach mindestens einem der Ansprüche 1 bis 7, **dadurch gekennzeichnet, dass** die Flüssigkristallmischung weiter eine oder mehrere Verbindungen der Formel V 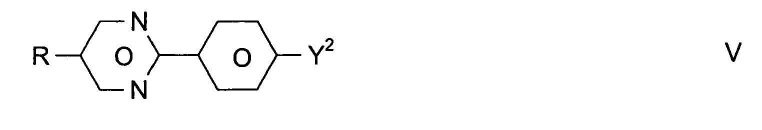 enthält, worin R die in Anspruch 1 angegebene Bedeutung besitzt und Y² F oder CI bedeutet.

9. Anzeige nach mindestens einem der Ansprüche 1 bis 8, **dadurch gekennzeichnet, dass** die Flüssigkristallmischung 11 bis 44 Gew.-% einer oder mehrerer Verbindungen mit einer 3,4,5-Trifluorphenylgruppe enthält.

10. Anzeige nach mindestens einem der Ansprüche 1 bis 9, **dadurch gekennzeichnet, dass** die Flüssigkristallmischung mehr als 58 Gew.-% einer oder mehrerer Verbindungen mit einer positiven dielektrischen Anisotropie von über +12 enthält.

11. Anzeige nach mindestens einem der Ansprüche 1 bis 10, **dadurch gekennzeichnet, dass** sie eine Schwellenspannung von 1,5 V oder weniger besitzt.

12. Flüssigkristallmischung oder -zusammensetzung wie in mindestens einem der Ansprüche 1 bis 11 definiert.

## Revendications

1. Affichage à cristaux liquides nématiques super-torsadés contenant :
- deux plaques externes à plans parallèles qui, ensemble avec un cadre, forment une cellule ;
- un mélange de cristaux liquides nématiques d'une anisotropie diélectrique positive, lequel mélange est présent dans la cellule ;
- des couches d'électrode avec des couches d'alignement superposées sur les intérieurs des plaques externes, lesquelles couches adressent chaque pixel au moyen de formes d'onde de rangées orthogonales ;
- un angle de pré-inclinaison entre l'axe longitudinal des molécules au niveau de la surface des plaques externes et les plaques externes allant de 1 degré à 30 degrés ; et
- un angle de torsion du mélange de cristaux liquides dans la cellule couche d'alignement à couche d'alignement présentant une valeur entre 22,5° et 600°, où le mélange de cristaux liquides nématiques est constitué essentiellement par :
a) 30 à 90% en poids d'un composant A de cristaux liquides comprenant un ou plusieurs composés présentant une anisotropie diélectrique supérieure à +1,5 ;
b) 10 à 55% en poids d'un composant B de cristaux liquides comprenant un ou plusieurs composés présentant une anisotropie diélectrique qui va de -1,5 à +1,5 ;
c) 0 à 10% en poids d'un composant D de cristaux liquides comprenant un ou plusieurs composés présentant une anisotropie diélectrique inférieure à -1,5 ; et
d) un composant C actif optiquement selon une quantité qui est telle que le rapport entre l'épaisseur de couche (la séparation des plaques externes à plans parallèles) et le pas naturel du mélange de cristaux liquides nématiques chiraux est compris entre environ 0,2 et environ 1,3,
**caractérisé en ce que** le mélange de cristaux liquides comprend au moins un composé du composant A comportant un groupe 3,4,5-tri-fluorophényle
et le composant A comprend en outre un ou plusieurs composés de la formule IIIb2 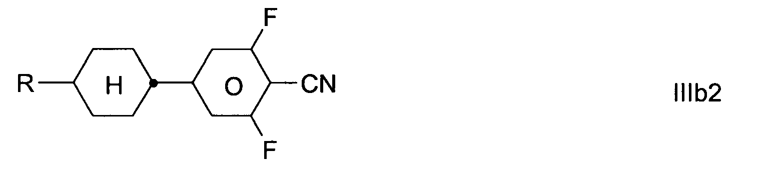 dans laquelle :
R est un groupe alkyle, alcoxy, alkényle ou alkényloxy en option fluoré avec de 1 à 12 atomes de C où un ou deux groupes CH₂ non adjacents peuvent être remplacés par -O-, -CH=CH-, -CO-, -OCO- ou -COO- de telle sorte que des atomes de O ne soient pas directement adjacents les uns aux autres,
au moins un composé de la formule I 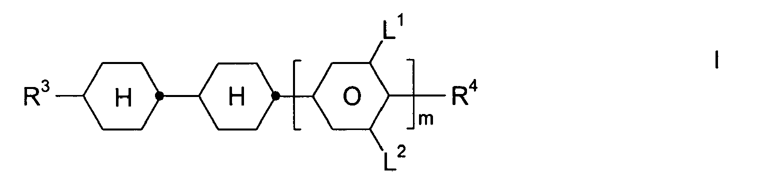 dans laquelle
R³ est un groupe alkényle avec de 2 à 7 atomes de C,
R⁴ est un groupe alkyle, alcoxy, alkényle ou alkényloxy en option fluoré avec de 1 à 12 atomes de C où un ou deux groupes CH₂ non adjacents peuvent être remplacés par -O-, -CH=CH-, -CO-, -OCO- ou -COO- de telle sorte que des atomes de O ne soient pas directement adjacents les uns aux autres, ou, dans le cas où m = 1, R⁴ peut également être Q-Y,
Q est CF₂, OCF₂, CFH, OCFH ou une liaison simple,
Y est F ou Cl,
L¹ et L² sont, chacun indépendamment l'un de l'autre, H ou F,
m est 0 ou 1
et au moins un composé de la formule IIb 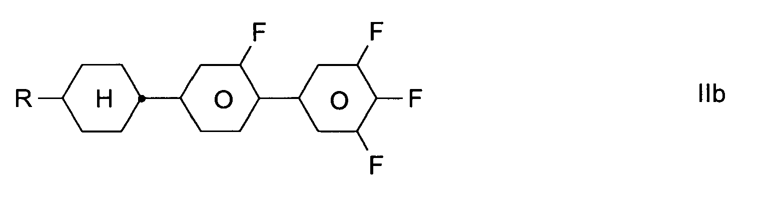 dans laquelle R présente la signification mentionnée ci avant.

2. Affichage selon la revendication 1, **caractérisé en ce que** le composant A comprend en outre un ou plusieurs composés de la formule III choisis parmi le groupe de formules 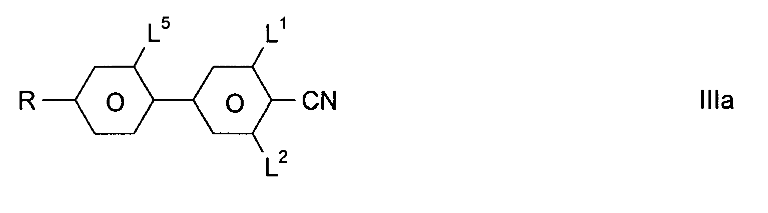 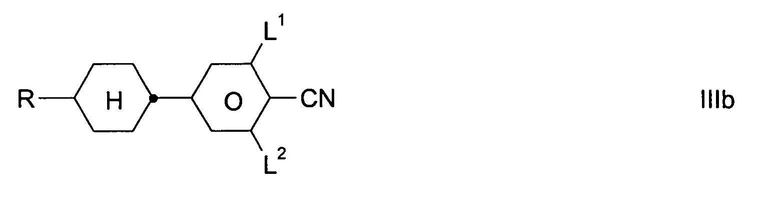 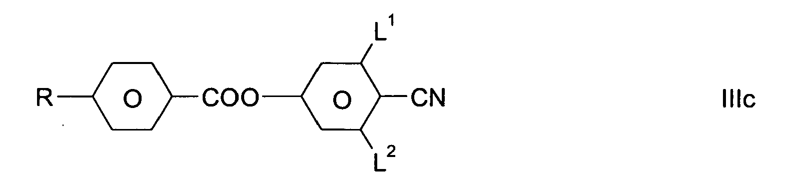 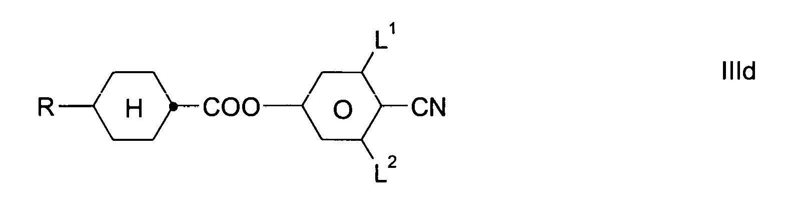 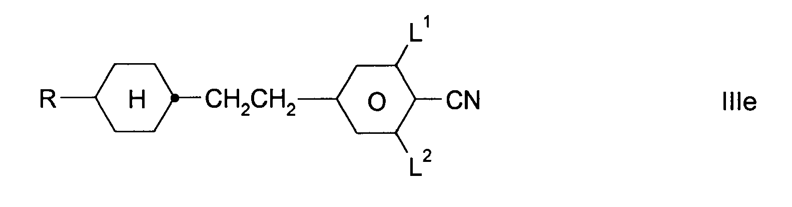 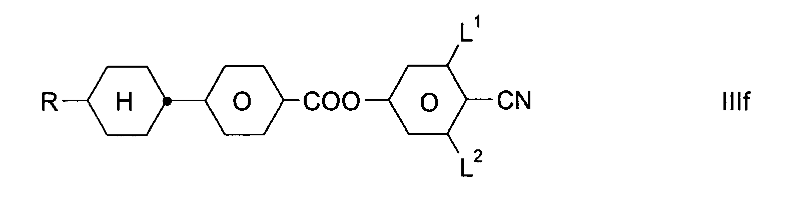 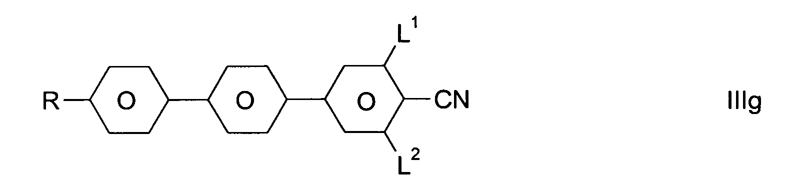 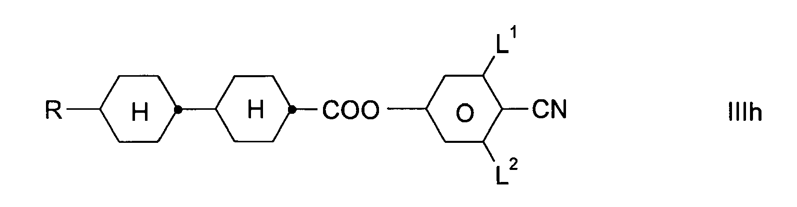 dans lesquelles R est tel que défini pour la formule IIIb2 selon la revendication 1 et
L¹, L² et L⁵ sont, chacun de manière indépendante, H ou F
et dont des composés de la formule IIIb2 sont exclus.

3. Affichage selon au moins l'une des revendications 1 et 2, **caractérisé en ce que** le composant A comprend un ou plusieurs composés de la formule III2b
dans laquelle R est un groupe alkyle.

4. Affichage selon au moins l'une des revendications 1 à 3, **caractérisé en ce que** le composant A comprend un ou plusieurs composés de la formule IIIc 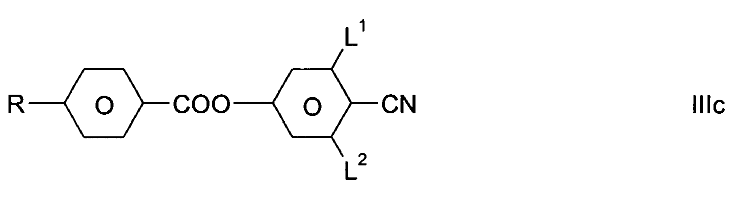 dans laquelle R est un groupe alkyle et
L¹ et L² sont, chacun de manière indépendante, H ou F.

5. Affichage selon au moins l'une des revendications 1 à 4, **caractérisé en ce que** le composant A comprend en outre un ou plusieurs composés de la formule II 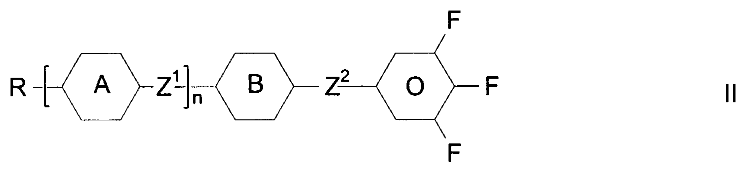 dans laquelle
R est un groupe alkyle, alcoxy, alkényle ou alkényloxy en option fluoré avec de 1 à 12 atomes de C où un ou deux groupes CH₂ non adjacents peuvent être remplacés par -O-, -CH=CH-, -CO-, -OCO- ou -COO- de telle sorte que des atomes de O ne soient pas directement adjacents les uns aux autres, 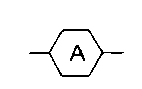 et 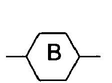 sont, chacun de manière indépendante, 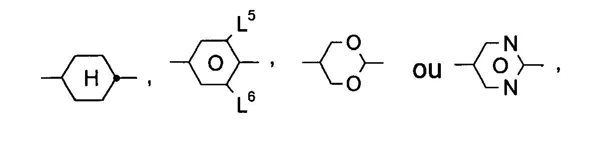
L⁵ et L⁶ sont, chacun de manière indépendante, H ou F,
Z¹ et Z² sont, indépendamment l'un de l'autre, -COO-, -CH₂CH₂-, -CH=CH-, -C≡C- ou une liaison simple, et
n est 0, 1 ou 2, dont les composés des formules I et IIb sont exclus.

6. Affichage selon au moins l'une des revendications 1 à 5, **caractérisé en ce que** le composant A comprend en outre un ou plusieurs composés de la formule II choisis parmi le groupe des formules qui suivent 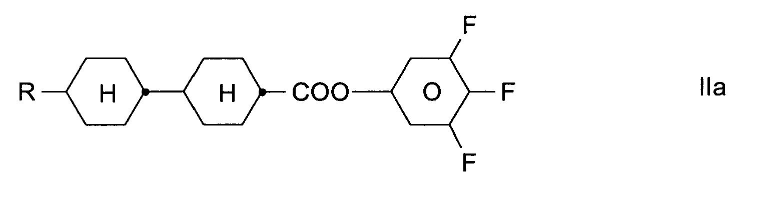 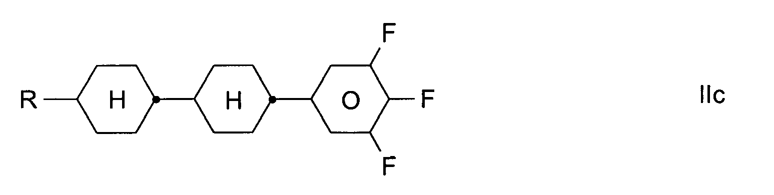 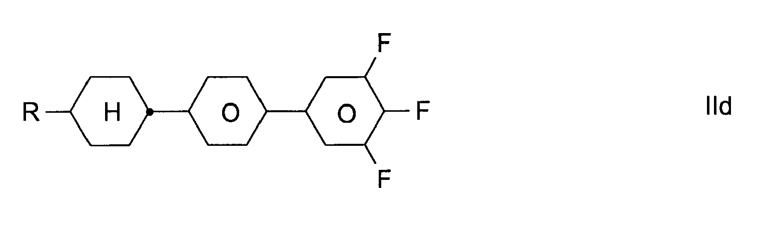 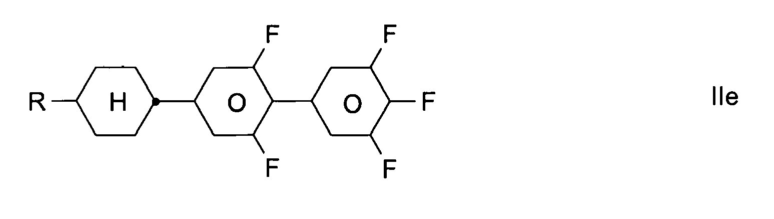 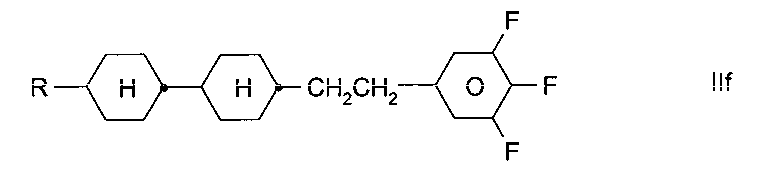 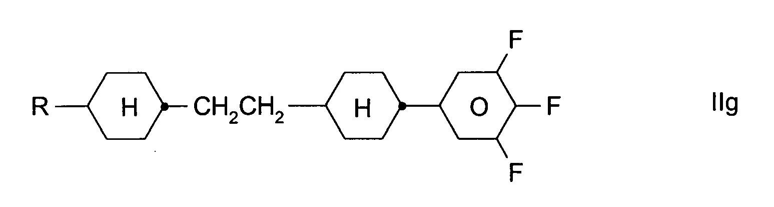 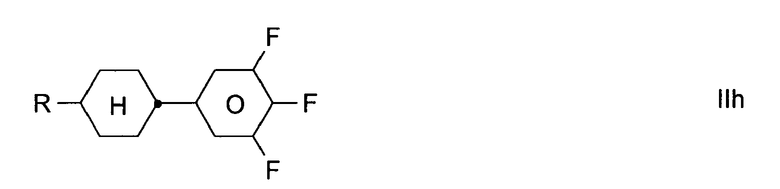 dans lesquelles R est tel que défini selon la revendication 1.

7. Affichage selon au moins l'une des revendications 1 à 6, **caractérisé en ce que** le composant A comprend un ou plusieurs composés de la formule IIa 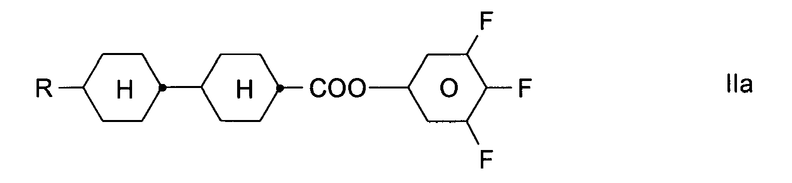 dans laquelle R est tel que défini selon la revendication 1.

8. Affichage selon au moins l'une des revendications 1 à 7, **caractérisé en ce que** le mélange de cristaux liquides comprend en outre un ou plusieurs composés de la formule V 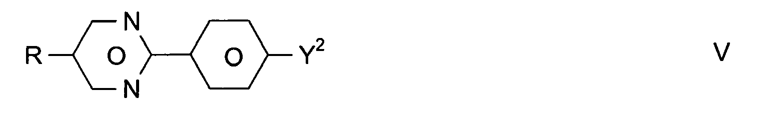 dans laquelle R présente la signification donnée selon la revendication 1 et Y² est F ou Cl.

9. Affichage selon au moins l'une des revendications 1 à 8, **caractérisé en ce que** le mélange de cristaux liquides contient de 11 à 44 % en poids d'un ou de plusieurs composés comportant un groupe 3,4,5-tri-fluorophényle.

10. Affichage selon au moins l'une des revendications 1 à 9, **caractérisé en ce que** le mélange de cristaux liquides comprend plus de 58 % en poids d'un ou de plusieurs composés présentant une anisotropie diélectrique positive de plus de +12.

11. Affichage selon au moins l'une des revendications 1 à 10, **caractérisé en ce qu'**il présente une tension de seuil de 1,5 V ou moins.

12. Mélange ou composition de cristaux liquides tel(le) que défini(e) selon au moins l'une des revendications 1 à 11.
